# EUROPEAN PATENT APPLICATION

(11) **EP 4 394 120 A1**
(43) Date of publication of application: **03.07.2024**
(21) Application number: 22863510.8
(22) Date of filing: 31.08.2022
(51) Int. Cl.: D06F 58/24

(54) **INTEGRATED WASHER DRYER**

(30) Priority: 01.09.2021 CN 202111023112; 30.11.2021 CN 202111450553
(71) Applicant: Shenzhen Roborock Innovation Technology Co., Ltd., Shenzhen, Guangdong 518000 (CN)
(72) Inventor: LI, Xing, Shenzhen, Guangdong 518000 (CN); DUAN, Chuanlin, Shenzhen, Guangdong 518000 (CN); YAN, Yadong, Shenzhen, Guangdong 518000 (CN); HUANG, Jibai, Shenzhen, Guangdong 518000 (CN); YANG, Zhimin, Shenzhen, Guangdong 518000 (CN); WANG, Zhe, Shenzhen, Guangdong 518000 (CN); LIU, Ming, Shenzhen, Guangdong 518000 (CN); LIN, Chenghu, Shenzhen, Guangdong 518000 (CN); FANG, Junjun, Shenzhen, Guangdong 518000 (CN); QI, Hang, Shenzhen, Guangdong 518000 (CN); XU, Ming, Shenzhen, Guangdong 518000 (CN); LIU, Tong, Shenzhen, Guangdong 518000 (CN); QUAN, Gang, Shenzhen, Guangdong 518000 (CN)
(74) Representative: Manitz Finsterwald Patent- und Rechtsanwaltspartnerschaft mbB
(86) International application number: PCT/CN2022/116142
(87) International publication number: WO 2023/030375

(57) **Abstract**

An integrated washer dryer, comprising a drum (R) and a drying module (D). The drying module (D) comprises a moisture absorption and moisture removal component (D1), a moisture absorption channel (D2), and a moisture removal channel (D3). The moisture absorption channel (D2) comprises a moisture absorption channel air inlet (D21) and a moisture absorption channel air outlet (D22). The drum (R) is communicated with the moisture absorption channel air inlet (D21) and the moisture absorption channel air outlet (D22), respectively. A moisture absorption channel fan (D23) is provided in the moisture absorption channel (D2) to form a moisture absorption air stream in the drum (R) and the moisture absorption channel (D2). A moisture removal channel fan (D33) is provided in the moisture removal channel (D3) to form a moisture removal air stream in the moisture removal channel (D3). The moisture absorption and moisture removal component (D1) is provided in a path of the moisture absorption channel (D2) and the moisture removal channel (D3), so that the moisture absorption air stream and the moisture removal air stream both flow through the moisture absorption and moisture removal component (D1), so that the moisture absorption and moisture removal component (D1) absorbs moisture of the moisture absorption air stream during rotation and discharges the absorbed moisture by means of the moisture removal air stream.

## Description

### TECHNICAL FIELD

The present disclosure relates to the field of household appliances, and, in particular, to an integrated washer-dryer.

### BACKGROUND

With the improvement of people's living standards, their lifestyles are also changing constantly, and they are no longer satisfied with the basic functions of consumer goods. For the washer industry, automatic integrated washer-dryers can dry clothes after washing, which is particularly useful for wet weather, and thus the automatic integrated washer-dryers are more and more favored by consumers. Drying module assemblies in existing integrated washer-dryers are typically classified into an exhaust type, a condensation type, and a heat-pump type.

The exhaust-type drying module assembly works by heating air with a heater in an exhaust assembly, delivering the heated air to a drum to take away moisture from clothes in the drum by using the heated air and, finally, discharging hot and humid air from a machine. In this way, there are defects of high energy consumption, low efficiency, high noise, and great damage to the clothes due to high hot air temperature. In addition, it is required to provide an additional exhaust pipe to discharge the heated air, which not only takes up a relatively large space but also presents a risk of scalding people or burning environmental objects.

The condensation-type drying module assembly works by heating air with a heater in a condensing assembly, blowing the heated air to a drum to take away moisture from clothes in the drum by using the heated air, condensing the resulting hot and humid air via a condenser to separate out the moisture and change the hot and humid air into dry and cold air, and heating the dry and cold air and delivering the heated air to the drum, repeating the process until the drying purpose is achieved. However, the energy consumption and drying efficiency of the condensation-type drying are strongly dependent on ambient temperature and, therefore, sharply fluctuate with the change of the ambient temperature, since heating and condensing procedures therein are closely related to a temperature difference. In particular, in regions with relatively low ambient temperature, there are defects such as high energy consumption, low efficiency, and even an unsatisfactory drying effect.

The heat-pump-type drying module assembly works by heating air with a condenser in a heat pump circulation assembly, delivering the heated air to a drum to take away moisture from clothes in the drum, delivering the resulting hot and humid air to an evaporator for dehumidification, heating the dehumidified air again with the condenser, and delivering the heated air to the drum, where a temperature-regulating medium circulates in the heat pump circulation assembly for releasing heat via condensation in the condenser and for absorbing heat via evaporation in the evaporator. In this way, the heater in the condensation-type drying module assembly is further eliminated, and, by recovering the heat generated during the drying by means of the temperature-regulating medium, the energy consumption is further reduced, and, furthermore, a drying temperature lower than that for the condensation-type drying can be maintained, thereby facilitating clothes protection. However, like the condensation-type drying, the heat-pump-type drying shows that its energy consumption and drying efficiency are also strongly dependent on the ambient temperature and, therefore, sharply fluctuate with the change of the ambient temperature, since the heat release effect of the condenser and the heat absorption effect of the evaporator are closely related to a temperature difference. In particular, in regions with low ambient temperature, there are still disadvantages of high energy consumption, low efficiency, and even an unsatisfactory drying effect. Furthermore, the high cost of the heat-pump-type drying module assembly, in particular a heat pump therein, is also the main reason why the price of the heat-pump-type integrated washer-dryer is hard to bring down.

### SUMMARY

In order to overcome the aforementioned defects, the present disclosure provides an integrated washer-dryer, including a water inlet, a water outlet, a drum, a drum driving part, and a drying module assembly, where the drum driving part is connected via transmission to the drum to drive the drum to rotate; the water inlet and the water outlet are communicated with the drum; the drying module assembly includes a moisture-absorbing and dehumidifying component, a moisture-absorbing passage, and a dehumidifying passage; the moisture-absorbing passage includes an air inlet of the moisture-absorbing passage and an air outlet of the moisture-absorbing passage; the drum is communicated with the air inlet of the moisture-absorbing passage and the air outlet of the moisture-absorbing passage, respectively; a fan for the moisture-absorbing passage is disposed in the moisture-absorbing passage so as to form a moisture-absorbing airflow in the drum and in the moisture-absorbing passage; a fan for the dehumidifying passage is disposed in the dehumidifying passage so as to form a dehumidifying airflow in the dehumidifying passage; the moisture-absorbing and dehumidifying component is disposed in a path of the moisture-absorbing passage and the dehumidifying passage such that the moisture-absorbing airflow and the dehumidifying airflow both flow through the moisture-absorbing and dehumidifying component, thereby allowing the moisture-absorbing and dehumidifying component to absorb moisture from the moisture-absorbing airflow during movement, in particular rotation, and to discharge the absorbed moisture by means of the dehumidifying airflow. The fan herein can be understood as any machine capable of delivering a gas, and is, for example, but not limited to, an air blower.

The moisture-absorbing and dehumidifying component includes a moisture-absorbing rotary wheel assembly, a rotary wheel housing and a rotary wheel driving mechanism for driving the moisture-absorbing rotary wheel assembly to rotate. The moisture-absorbing rotary wheel assembly is rotatably supported in the rotary wheel housing along an axis of rotation. The moisture-absorbing rotary wheel assembly includes a wheel disc made of a regenerative moisture-absorbing material, an outer-periphery housing member connected to a peripheral region of the wheel disc in a relative non-rotatable manner, and a center housing member connected to a center region of the wheel disc in a relative non-rotatable manner.

In some technical solutions, the outer-periphery housing member includes an outer-periphery upper clamp housing and an outer-periphery lower clamp housing. The outer-periphery upper clamp housing and the outer-periphery lower clamp housing are configured to be fixed with each other while surrounding an outer peripheral surface of the wheel disc, and to clamp an end surface in a peripheral region of the wheel disc. In an additional or alternative technical solution, the center housing member includes a center upper clamp member and a center lower clamp member. The center upper clamp member and the center lower clamp member are configured to at least partially penetrate through a center hole of the wheel disc and be fixed with each other and clamp an end surface in a center region of the wheel disc. The fixing between the outer-periphery upper clamp housing and the outer-periphery lower clamp housing and/or the fixing between the center upper clamp member and the center lower clamp member is implemented by, for example, snap fitting, threaded fasteners, welding and/or adhesives. In some technical solutions, the outer-periphery housing member includes an end segment extending in a direction perpendicular to the axis of rotation and a circumferential segment extending circumferentially. The end surface in the peripheral region of the wheel disc is clamped by using the end segment of the outer-periphery housing member. In particular, the outer-periphery upper clamp housing and the outer-periphery lower clamp housing may each have a similarly L-shaped longitudinal section, and each has an end segment extending in the direction perpendicular to the axis of rotation and a circumferential segment extending circumferentially. The end segment of the outer-periphery housing member facing an inner bottom surface of the rotary wheel housing is particularly configured to at least partially cover, in a direction of the axis of rotation, a bottom roller mechanism on an inner surface of the rotary wheel housing, such that the end segment of the outer-periphery lower clamp housing can be in rolling contact with the bottom roller mechanism.

In some technical solutions, the center housing member includes an end segment extending in the direction perpendicular to the axis of rotation and a circumferential segment extending circumferentially. The end surface in the center region of the wheel disc is clamped by using the end segment of the center housing member. In particular, the center upper clamp member and the center lower clamp member may each have a similarly L-shaped longitudinal section, and each has an end segment extending in the direction perpendicular to the axis of rotation and a circumferential segment extending circumferentially.

In some technical solutions, the moisture-absorbing rotary wheel assembly further includes a deformable center end surface damping member that is arranged between the end surface in the center region of the wheel disc and the end surface of the end segment of the center housing member to form a buffer.

In some technical solutions, the moisture-absorbing rotary wheel assembly further includes a power input member for introducing, from the rotary wheel driving mechanism, power allowing the moisture-absorbing rotary wheel assembly to rotate. The power input member is integrally formed on or connected to the surface of the outer-periphery housing member or the surface of the center housing member. The power input member includes, for example, convex teeth, a shaped groove, or a smooth surface.

In some technical solutions, the moisture-absorbing rotary wheel assembly further includes an auxiliary rotating ring. The auxiliary rotating ring is integrally formed on or connected to the outer peripheral surface of the outer-periphery housing member and matches a position of a circumferential roller mechanism that is arranged on an inner periphery of the rotary wheel housing so as to be in rolling contact with the circumferential roller mechanism.

In some technical solutions, the moisture-absorbing rotary wheel assembly further includes a deformable outer-periphery damping member that is arranged between the outer peripheral surface of the wheel disc and an inner peripheral surface of the outer-periphery housing member to form a buffer. The outer-periphery damping member is preferably glued onto the outer peripheral surface of the wheel disc.

In some technical solutions, a sealing member of a rotary wheel is disposed at an outer surface of an outer periphery of the moisture-absorbing rotary wheel assembly; a sealing member of the rotary wheel housing is disposed at an inner surface of the rotary wheel housing; and the sealing member of the rotary wheel and the sealing member of the rotary wheel housing are in contact with each other in a relative rotatable manner to form a seal. "Being in contact with each other in a relative rotatable manner" refers to the fact that the contact between the sealing member of the rotary wheel and the sealing member of the rotary wheel housing does not significantly increase a rotation resistance to the moisture-absorbing rotary wheel assembly provided with the sealing member of the rotary wheel. "The outer surface of the outer periphery of the moisture-absorbing rotary wheel assembly" herein may not only include the outer peripheral surface of the moisture-absorbing rotary wheel assembly, but also may include an end surface, extending perpendicular to the axis of rotation, at the outer periphery of the moisture-absorbing rotary wheel assembly, and may also include the outer surface that is located at the outer periphery and disposed inclined to the axis of rotation. "The inner surface of the rotary wheel housing" herein may not only include the inner peripheral surface of the rotary wheel housing, but also may include an inner top surface or inner bottom surface of the rotary wheel housing. Those skilled in the art can understand that a contact surface between the sealing member of the rotary wheel and the sealing member of the rotary wheel housing as described above is necessarily located between an air inlet path and an air outlet path of the moisture-absorbing rotary wheel assembly to act as a seal. In some technical solutions, the sealing member of the rotary wheel is formed by the outer surface per se of the outer periphery of the moisture-absorbing rotary wheel assembly or by a surface structure integrally formed on the outer surface, and/or the sealing member of the rotary wheel housing is formed by the inner surface per se of the rotary wheel housing or by a surface structure integrally formed on the inner surface. Additionally or alternatively, the sealing member of the rotary wheel and/or the sealing member of the rotary wheel housing are/is formed by a separately manufactured sealing member-for example, a seal strip, a soft seal rubber, etc. For example, in a technical solution, the sealing member of the rotary wheel is formed by a seal strip fixed onto the outer peripheral surface of the moisture-absorbing rotary wheel assembly, and the sealing member of the rotary wheel housing is formed by the circumferential surface per se of the rotary wheel housing. In another technical solution, the sealing member of the rotary wheel is formed by the outer peripheral surface per se of the moisture-absorbing rotary wheel assembly, and the sealing member of the rotary wheel housing is formed by a seal strip fixed onto the inner peripheral surface of the rotary wheel housing. In yet another technical solution, the sealing member of the rotary wheel and the sealing member of the rotary wheel housing are each formed by a seal strip. In some technical solutions, the sealing member of the rotary wheel and the sealing member of the rotary wheel housing are in contact with each other in a relative rotatable manner to form a seal by using their surfaces extending in parallel to the axis of rotation and/or their surfaces extending perpendicular to the axis of rotation. For example, in a technical solution, the sealing member of the rotary wheel and the sealing member of the rotary wheel housing are arranged side by side on the same plane in a direction perpendicular to the axis of rotation such that the sealing member of the rotary wheel and the sealing member of the rotary wheel housing are in contact with each other in a relative rotatable manner to form a seal by using their opposite peripheral surfaces. In another technical solution, the sealing member of the rotary wheel and the sealing member of the rotary wheel housing are staggered but arranged closely along the axis of rotation such that the sealing member of the rotary wheel and the sealing member of the rotary wheel housing are in contact with each other in a relative rotatable manner to form a seal by using their opposite end surfaces. In some technical solutions, a plurality of sets of the sealing members of the rotary wheel and the sealing members of the rotary wheel housing that are in contact with each other in a relative rotatable manner to form a seal are provided, with each set of the sealing member of the rotary wheel and the sealing member of the rotary wheel housing arranged staggered from each other to form a redundant seal. For example, in a technical solution, all the plurality of sets of the sealing members of the rotary wheel and the sealing members of the rotary wheel housing are disposed staggered from each other in the direction of the axis of rotation. In another technical solution, at least one of the plurality of sets of the sealing members of the rotary wheel and the sealing members of the rotary wheel housing may also be arranged between the end surface of the moisture-absorbing rotary wheel assembly and the inner top surface or inner bottom surface of the rotary wheel housing. In some technical solutions, a plurality of sealing members of the rotary wheel and/or a plurality of sealing members of the rotary wheel housing are provided. One of the sealing members of the rotary wheel and the plurality of the sealing members of the rotary wheel housing can be in contact with each other in a relative rotatable manner to form a seal, or one of the sealing members of the rotary wheel housing and the plurality of the sealing members of the rotary wheel can be in contact with each other in a relative rotatable manner to form a seal. Optionally, the outer peripheral surface of the sealing member of the rotary wheel forms the maximum diameter of the moisture-absorbing rotary wheel assembly. Particularly preferably, the moisture-absorbing rotary wheel assembly includes an outer-periphery upper clamp housing and an outer-periphery lower clamp housing that are fixed with each other. The sealing member of the rotary wheel is arranged at an outer-periphery side of a position where the outer-periphery upper clamp housing and the outer-periphery lower clamp housing are fixed with each other and seals this position.

In some technical solutions, the power input member, the auxiliary rotating ring and the sealing member of the rotary wheel as mentioned above are completely staggered from each other and particularly arranged closely, in the direction of the axis of rotation.

The rotary wheel housing includes a rotary wheel upper housing and a rotary wheel lower housing. The rotary wheel upper housing and the rotary wheel lower housing may be detachably connected to each other. The rotary wheel lower housing can be integrally formed together with lower housings of other functional assemblies. A plurality of partition ribs extending in a radius range is integrally formed on or fixed onto an inner wall of an end surface of the rotary wheel housing, thereby partitioning an inner cavity of the rotary wheel housing at least into a moisture-absorbing region and a dehumidifying region. Gaps exist between the partition ribs and the wheel disc of the moisture-absorbing rotary wheel assembly. In some technical solutions, two partition ribs extending in a radius range are integrally formed on or fixed onto an inner wall of an end surface of the rotary wheel lower housing of the rotary wheel housing, thereby partitioning an inner cavity of the rotary wheel housing into a moisture-absorbing region and a dehumidifying region. In some technical solutions, at least two sets of partition ribs are oppositely formed at positions in inner end surfaces of the rotary wheel upper housing and the rotary wheel lower housing of the rotary wheel housing and extend toward each other, with an interval therebetween slightly greater than an axial thickness of the moisture-absorbing rotary wheel assembly.

In some other technical solutions, at least three partition ribs opposite one another and extending toward one another are integrally formed on or fixed onto the inner wall of the end surface of the rotary wheel housing, thereby partitioning an inner cavity of the rotary wheel housing at least into a moisture-absorbing region, a dehumidifying region, and a cooling region. The cooling region is arranged between the moisture-absorbing region and the dehumidifying region. The moisture-absorbing region is in fluid communication with the moisture-absorbing passage, the dehumidifying region is in fluid communication with the dehumidifying passage, and the cooling region is in fluid communication with a cooling passage. A fan for the cooling passage is disposed in the cooling passage to deliver air from an ambient environment to the cooling region of the rotary wheel housing. Optionally, one cooling passage branch is branched from the dehumidifying passage, thereby introducing gas to the cooling region of the rotary wheel housing by using the fan for the dehumidifying passage. An air outlet of the cooling passage may be in fluid communication with an air outlet disposed in an outer housing of the integrated washer-dryer, or is joined with a segment, located downstream of the moisture-absorbing and dehumidifying component, in the dehumidifying passage.

In some technical solutions, partition sealing members are fixed onto surfaces of the partition ribs, in particular the partition ribs defining the dehumidifying region in a surrounding manner, facing the wheel disc of the moisture-absorbing rotary wheel assembly; and a distance between each of the partition sealing members and the wheel disc in the moisture-absorbing rotary wheel assembly ranges between 0 mm and 5 mm. In some technical solutions, partition seal strips are fixed to at least some of the partition ribs, and the partition seal strips interfere with the wheel disc of the moisture-absorbing rotary wheel assembly. In some technical solutions, the partition sealing members are sized to maintain a tiny gap only with the wheel disc so as to prevent the airflow from scurrying among the moisture-absorbing region, the dehumidifying region, and optionally the cooling region, as much as possible, without blocking the rotation of the wheel disc. It is particularly advantageous to set the gap between the partition sealing members and the wheel disc to range from 0.2 mm to 5 mm, for example, 0.8 mm. With such a gap, the rotation of the wheel disc is not blocked under the consideration of the general axial run-out of the wheel disc during its rotational operation, and, furthermore, the airflow can be efficiently prevented from scurrying among the respective regions. The partition sealing members are preferably flexible to avoid damage to the wheel disc when the axial run-out of the wheel disc is extremely violent. The partition sealing members are preferably configured as foam, silica gel, or soft rubber. In some other technical solutions, the partition sealing members are configured as seal strips. In this case, the seal strips in an assembled state can be in contact with the wheel disc to form a seal in a relative rotatable contact manner.

In some technical solutions, partition heat-insulation members are further fixed onto the surfaces of the partition ribs facing the wheel disc of the moisture-absorbing rotary wheel assembly so as to reduce heat diffusion among the moisture-absorbing region, the dehumidifying region, and optionally the cooling region. The partition heat-insulation members are at least partially covered by the partition sealing members, and the partition sealing members always each have a part closer to the wheel disc than the partition heat-insulation members. In an advantageous technical solution, grooves for arrangement of the partition heat-insulation members are configured on a side of the partition sealing members facing the wheel disc. The thickness of each groove is greater than the thickness of each partition heat-insulation member such that the partition sealing member is closer to the wheel disc. The partition sealing members and/or the partition heat-insulation members have a shape or size matching the partition ribs and, if necessary, the edge of the inner cavity defined by the rotary wheel housing in a surrounding manner. The partition heat-insulation members are preferably made of a heat-insulation material. However, it is also possible to contemplate manufacture of the heat-insulation members by low-cost metal or alloy. Although with a better heat-conducting property, the metal or alloy herein still has a certain heat-insulation effect after being covered by the sealing members.

In some technical solutions, partition compression sheets are further fixed onto the surfaces of the partition ribs facing the wheel disc of the moisture-absorbing rotary wheel assembly. The partition compression sheets are configured to position the partition sealing members and extrude the partition sealing members onto the partition ribs. The partition compression sheets may have, for example, bulges for positioning and extruding. Preferably, the partition compression sheets and the partition heat-insulation members are integrally formed.

In some technical solutions, at least one airflow guide sheet is further disposed in the rotary wheel housing and configured to divide a moisture-absorbing airflow entering the rotary wheel housing into at least two streams of airflows, and to allow the at least two streams of airflows to flow through the wheel disc of the moisture-absorbing rotary wheel assembly from different regions, respectively. One end of the at least one airflow guide sheet is formed or fixed, preferably evenly arranged, in a region of a moisture-absorbing airflow inlet of the rotary wheel housing for the moisture-absorbing airflow. The at least one airflow guide sheet is preferably substantially evenly arranged in the entire moisture-absorbing region. The at least one airflow guide sheet is preferably configured in a bending way. This can prevent the moisture-absorbing airflow from being accumulated in a region, located outward in a radial direction, along with the rotating moisture-absorbing rotary wheel assembly after the moisture-absorbing airflow enters the moisture-absorbing region. That is, the evenness of the moisture-absorbing airflow flowing through the wheel disc can be improved, thereby increasing the moisture-absorbing efficiency.

At least one circumferential roller mechanism may be further disposed at an inner periphery of the rotary wheel housing, and it includes a circumferential roller and a circumferential roller bracket, the circumferential roller being rotatably supported on the circumferential roller bracket and the circumferential roller bracket being disposed at the inner periphery of the rotary wheel housing where, when viewed in a direction parallel to the axis of rotation, the circumferential roller is arranged in a dimensional range of the moisture-absorbing rotary wheel assembly in a direction of the axis of rotation; when viewed in a direction perpendicular to the axis of rotation, the circumferential roller is arranged between the moisture-absorbing rotary wheel assembly and the rotary wheel housing; and the circumferential roller can be in rolling contact with an outer peripheral surface of the moisture-absorbing rotary wheel assembly for at least part of the time during the rotation of the moisture-absorbing rotary wheel assembly.

In some technical solutions, at an initial mounting position, the circumferential roller mechanism is in rolling fit with the moisture-absorbing rotary wheel assembly without mutual extrusion. Hence, the circumferential rolling mechanism can always assist the rotation of the moisture-absorbing rotary wheel assembly without significantly increasing the rotation resistance to the moisture-absorbing rotary wheel assembly and prevent the moisture-absorbing rotary wheel assembly from radially shaking during rotation, thereby guaranteeing the stable rotation of the moisture-absorbing rotary wheel assembly.

In an alternative technical solution, at the initial mounting position, a gap exists between the circumferential roller mechanism and the moisture-absorbing rotary wheel assembly, and, when the moisture-absorbing rotary wheel assembly is deflected in a direction perpendicular to the axis of rotation, the moisture-absorbing rotary wheel assembly and the circumferential roller mechanism are in rolling contact with each other. Hence, the rotation resistance to the moisture-absorbing rotary wheel assembly can be further reduced during its normal rotation, and the circumferential roller mechanism only functions when the moisture-absorbing rotary wheel assembly radially shakes.

In some technical solutions, the circumferential roller is configured to be flexible and deformable. Hence, the radial shaking of the moisture-absorbing rotary wheel assembly can be buffered by simply utilizing the deformable property of the circumferential roller. Advantageously, the circumferential roller includes an inner ring, an outer wheel ring, and spokes connecting the inner ring to the outer wheel ring. At least two spokes are provided and are configured to be flexible and deformable. Further advantageously, connecting lines formed by the spokes at connections with the inner ring and the outer wheel ring do not pass through the axis of rotation of the roller. The inner ring herein may be understood as a rotation shaft or a pipe sleeving the rotation shaft. In an alternative technical solution, the spokes described above are replaced with a flexible material-for example, foam, a silica gel ring, etc. That is, the flexible material is disposed between the inner ring and the outer wheel ring. For example, the flexible material sleeves the inner ring, and the outer wheel ring sleeves the flexible material. The outer wheel ring herein may be configured to be rigid or flexible.

In an additional or alternative technical solution, the circumferential roller bracket is configured to be deflectable. In particular, the circumferential roller bracket per se may be configured to be elastically deformable. Additionally or alternatively, the circumferential roller bracket is configured to be capable of moving wholly along a sliding track to change its distance from the axis of rotation. An elastic reset member allowing the circumferential roller bracket to return to an initial position is fixed onto the rotary wheel housing. For example, the sliding track consists of a groove configured on the rotary wheel housing and a slider configured on the circumferential roller bracket in a manner of matching the groove. Alternatively, the sliding track consists of a guide bulge configured on the rotary wheel housing and a guide claw configured on the circumferential roller bracket in a manner of matching the guide bulge.

In some technical solutions, a plurality of circumferential roller mechanisms, preferably six circumferential roller mechanisms, is arranged at the inner periphery of the rotary wheel housing. Particularly advantageously, the inner periphery of the rotary wheel housing is configured in the shape of a ladder; the circumferential roller bracket is disposed on an end surface of the ladder extending in a direction perpendicular to the axis of rotation, i.e., radially; and the circumferential roller is rotatably supported on the circumferential roller bracket. Preferably, a peripheral surface of the ladder forms the sealing member of the rotary wheel housing and forms a contact seal with the sealing member of the rotary wheel of the moisture-absorbing rotary wheel assembly. The plurality of circumferential roller mechanisms can be evenly or unevenly arranged at the inner periphery of the rotary wheel housing. Particularly advantageously, when the moisture-absorbing rotary wheel assembly is driven at the outer periphery thereof by the rotary wheel driving mechanism, the plurality of circumferential roller mechanisms is unevenly arranged at the inner periphery of the rotary wheel housing where more circumferential roller mechanisms are disposed at a side away from a contact site between the rotary wheel driving mechanism and the moisture-absorbing rotary wheel assembly. For example, when the rotary wheel driving mechanism and the moisture-absorbing rotary wheel assembly interact in a gear engagement manner, a gear engagement site is a contact site between the rotary wheel driving mechanism and the moisture-absorbing rotary wheel assembly. In this case, it is advantageous to provide more circumferential roller mechanisms at a side away from the gear engagement site. For another example, when the rotary wheel driving mechanism and the moisture-absorbing rotary wheel assembly interact in a belt pulley manner, a position at which a belt in the rotary wheel driving mechanism and the outer periphery of the moisture-absorbing rotary wheel assembly extrude each other is a contact site between the rotary wheel driving mechanism and the moisture-absorbing rotary wheel assembly. In this case, it is advantageous to provide more circumferential roller mechanisms at a side away from an extruded site. Since the rotary wheel is driven circumferentially, it is inevitable to bring an eccentric force to the rotary wheel to a certain extent.

In some technical solutions, the circumferential roller at least partially protrudes, only at its axial height, from an inner peripheral wall of the rotary wheel housing instead of protruding toward the axis of rotation with respect to all the inner peripheral surfaces of the rotary wheel housing. In some other technical solutions, the circumferential roller at least partially protrudes, toward the axis of rotation, from the entire inner peripheral wall of the inner periphery of the rotary wheel housing, and thus is closer to the axis of rotation than all the inner peripheral surface segments of the inner periphery of the rotary wheel housing.

In some technical solutions, the circumferential roller bracket is fixed on the rotary wheel housing by virtue of a fixing mechanism. The fixing mechanism is configured to be capable of adjusting, at an initial mounting position, a radial distance between the circumferential roller bracket and the moisture-absorbing rotary wheel assembly. Hence, the circumferential roller mechanism can adapt to the moisture-absorbing rotary wheel assemblies of various dimensions and can adapt to various operation modes.

At least one bottom roller mechanism may be further disposed at an inner bottom surface of the rotary wheel housing; the bottom roller mechanism includes a bottom roller and a bottom roller bracket; the bottom roller is rotatably supported on the bottom roller bracket; the bottom roller bracket is disposed on the rotary wheel housing; when viewed in a direction perpendicular to the axis of rotation, the bottom roller is arranged in a dimensional range of the moisture-absorbing rotary wheel assembly in the direction perpendicular to the axis of rotation; and when viewed in a direction parallel to the axis of rotation, the bottom roller is arranged between the moisture-absorbing rotary wheel assembly and the rotary wheel housing, and a distance between the bottom roller and the moisture-absorbing rotary wheel assembly is smaller than a minimum distance between the moisture-absorbing rotary wheel assembly and the rotary wheel housing. Preferably, the bottom roller at least partially protrudes, toward the moisture-absorbing rotary wheel assembly, from the entire inner bottom surface of the rotary wheel housing.

In some technical solutions, at the initial mounting position, the bottom roller mechanism is in rolling contact with the bottom of the rotating moisture-absorbing rotary wheel assembly. In another alternative technical solution, at the initial mounting position, a gap exists between the bottom roller mechanism and the moisture-absorbing rotary wheel assembly, and, when the moisture-absorbing rotary wheel assembly is deflected in the direction of the axis of rotation, the moisture-absorbing rotary wheel assembly and the bottom roller mechanism are in rolling contact with each other.

In some technical solutions, the outer-periphery housing member of the moisture-absorbing rotary wheel assembly has a pair of end segments extending in the direction perpendicular to the axis of rotation, and the bottom roller mechanism is arranged in a region, opposite the end segment of the outer-periphery housing member facing the inner bottom surface of the rotary wheel housing, of the inner bottom surface of the rotary wheel housing, such that the end segment can be in rolling contact with the bottom roller mechanism. In another alternative technical solution, the center housing member of the moisture-absorbing rotary wheel assembly has a pair of end segments extending in the direction perpendicular to the axis of rotation, and this pair of end segments is used to clamp the end surface in the center region of the wheel disc, whereby the bottom roller mechanism is arranged in a region, opposite the end segment of the center housing member, of the inner bottom surface of the rotary wheel housing, such that the bottom roller mechanism is in rolling contact with the end segment of the center housing member of the moisture-absorbing rotary wheel assembly.

In some technical solutions, a plurality of, preferably four, bottom roller mechanisms is disposed at the inner bottom surface of the rotary wheel housing. The plurality of bottom roller mechanisms is preferably evenly distributed, on the same circumference, on the inner bottom surface of the rotary wheel housing.

In some technical solutions, the bottom roller mechanisms are configured to be non-deformable or slightly deformable.

In some technical solutions, the peripheral surface of the bottom roller is smoothly configured or configured with an uneven surface structure.

In some technical solutions, the bottom roller bracket is integrally formed on or connected to the inner bottom surface of the rotary wheel housing. The bottom roller bracket is configured to be a hollow member, and an assembled bottom roller is partially accommodated in an inner cavity of the hollow member. In particular, a groove for accommodating the bottom roller mechanism is disposed on the inner bottom surface of the rotary wheel housing, and the bottom roller bracket is fixed in the groove, or the bottom roller bracket is directly formed as a groove structure in the inner bottom surface of the rotary wheel housing.

In some technical solutions, the bottom roller bracket is fixed on the rotary wheel housing by virtue of a fixing mechanism. The fixing mechanism is configured to be capable of adjusting, at an initial mounting position, an axial distance between the bottom roller bracket and the moisture-absorbing rotary wheel assembly.

The moisture-absorbing rotary wheel assembly is driven at the outer periphery thereof by the rotary wheel driving mechanism. In other words, the rotary wheel driving mechanism drives, at the outer periphery of the power input member of the moisture-absorbing rotary wheel assembly, the moisture-absorbing rotary wheel assembly to rotate. The rotary wheel driving mechanism includes a rotary wheel driving motor and a paired transmission mechanism. An output shaft of the rotary wheel driving motor and the paired transmission mechanism are connected to each other in a relative non-rotatable manner by, for example, keyway fit and the like. The paired transmission mechanism is configured in a manner of matching the power input member of the moisture-absorbing rotary wheel assembly.

In some technical solutions, bulging teeth are configured at the periphery of the power input member, and the rotary wheel driving mechanism is engaged with the bulging teeth to drive the power input member to rotate. The bulging teeth are configured as, for example, straight teeth, helical teeth, curved teeth, or sprocket teeth with a specified tooth shape. Accordingly, the paired transmission mechanism of the rotary wheel driving mechanism may be configured as, for example, a straight gear, a helical gear, a bevel gear, or a sprocket.

In another alternative technical solution, a shaped groove is configured at the periphery of the power input member, and the rotary wheel driving mechanism is engaged with the shaped groove to drive the power input member to rotate. Accordingly, the paired transmission mechanism of the rotary wheel driving mechanism may be configured as, for example, an engagement-type belt pulley, such as a tooth belt pulley.

In another alternative technical solution, a smooth surface is disposed at the periphery of the power input member, and the rotary wheel driving mechanism drives the power input member to rotate by means of a friction force between the rotary wheel driving mechanism and the smooth surface. Accordingly, the paired transmission mechanism of the rotary wheel driving mechanism may be configured as, for example, a friction-type belt pulley, such as a flat belt pulley. Optionally, a surface microstructure for increasing the friction force is configured on the smooth surface.

In some technical solutions, the rotary wheel housing also has an accommodation part for accommodating the rotary wheel driving mechanism. That is to say, the rotary wheel housing has accommodation parts for accommodating the moisture-absorbing rotary wheel assembly and the rotary wheel driving mechanism, respectively. This allows the rotary wheel driving mechanism and the moisture-absorbing rotary wheel assembly to share the same rotary wheel housing. Advantageously, the accommodation part of the rotary wheel housing for the rotary wheel driving mechanism is provided with a baffle, and optionally provided with a sealing member for blocking the airflow from flowing through the accommodation part for the moisture-absorbing rotary wheel assembly to the accommodation part for the rotary wheel driving mechanism. In an alternative technical solution, the rotary wheel driving mechanism and the moisture-absorbing rotary wheel assembly have respective individual housings that are fixed together. In such a technical solution, it is necessary to provide additional sealing members to seal positions where the respective housings of the rotary wheel driving mechanism and the moisture-absorbing rotary wheel assembly are fixed to each other.

In some technical solutions, the rotary wheel driving mechanism is entirely or partially arranged beyond a radial dimensional range of the moisture-absorbing rotary wheel assembly.

The dehumidifying passage has the air inlet of the dehumidifying passage and the air outlet of the dehumidifying passage, which are configured to communicate the ambient environment with the dehumidifying passage. The air outlet of the dehumidifying passage is communicated with an air outlet of the outer housing that is arranged in the outer housing of the integrated washer-dryer, and the air outlet of the dehumidifying passage is communicated with an air outlet of the outer housing that is arranged in the outer housing of the integrated washer-dryer. With the fan for the dehumidifying passage, the air from the ambient environment is delivered to the moisture-absorbing and dehumidifying component by means of the air inlet of the dehumidifying passage, and a gas flowing through the moisture-absorbing and dehumidifying component is discharged to the ambient environment by means of the air outlet of the dehumidifying passage, thereby forming a dehumidifying airflow in the dehumidifying passage.

In such a technical solution, advantageously, a dehumidifying and condensing assembly is disposed at the downstream of the moisture-absorbing and dehumidifying component in the dehumidifying passage, and the dehumidifying and condensing assembly is configured to condense and dehumidify the dehumidifying airflow flowing through the moisture-absorbing and dehumidifying component. Hence, it can be ensured that the gas discharged via the air outlet of the outer housing in the outer housing of the integrated washer-dryer has a relatively low temperature and is relatively dry, thereby having no effect on the ambient environment.

In such a technical solution, further advantageously, a dehumidifying and filtering part is disposed upstream of the moisture-absorbing and dehumidifying component in the dehumidifying passage, in particular at the air inlet of the dehumidifying passage, such that impurities in the air from the ambient environment are filtered away, thereby protecting the dehumidifying passage, in particular the moisture-absorbing and dehumidifying component, from impurity pollution.

In another alternative technical solution, the dehumidifying passage is configured as an inner circulating passage that is not communicated with the ambient environment. In the dehumidifying passage, the dehumidifying and condensing assembly is arranged downstream of the moisture-absorbing and dehumidifying component to condense and dehumidify a hot and humid gas flowing through the moisture-absorbing and dehumidifying component; and the fan for the dehumidifying passage is arranged upstream or downstream of the moisture-absorbing and dehumidifying component to deliver a dry air condensed and dehumidified by the dehumidifying and condensing assembly back to the moisture-absorbing and dehumidifying component again, thereby forming an inner circulating dehumidifying airflow inside the dehumidifying passage. Hence, a dehumidifying and filtering part, the air inlet and air outlet of the outer housing in the outer housing of the integrated washer-dryer and a passageway communicated with the air inlet and the air outlet of the outer housing are omitted, which reduces the cost and saves space.

Particularly advantageously, the drying module assembly includes a dehumidifying and heating assembly arranged in the path of the dehumidifying passage. The dehumidifying and heating assembly is configured to heat the dehumidifying airflow for increasing the temperature of the dehumidifying airflow, thereby improving the regeneration efficiency of the wheel disc. As viewed from the flow path of the dehumidifying airflow, the dehumidifying and heating assembly may be arranged upstream and/or downstream of the moisture-absorbing and dehumidifying component. In some technical solutions, the dehumidifying and heating assembly and the moisture-absorbing and dehumidifying component are disposed separately. In another alternative technical solution, the dehumidifying and heating assembly and the moisture-absorbing and dehumidifying component are integrally formed, or fixed together by virtue of a connecting means, for example, a threaded fastener. Particularly preferably, a dehumidifying and heating assembly housing of the dehumidifying and heating assembly and the rotary wheel housing of the moisture-absorbing and dehumidifying component are configured to have substantially complementary shapes and are connected to each other. The dehumidifying and heating assembly can determine heating power according to a detected value of a temperature sensor.

When the dehumidifying and heating assembly and the moisture-absorbing and dehumidifying component are integrally formed or fixed together, the dehumidifying and heating assembly includes a dehumidifying and heating assembly housing and a dehumidifying and heating member. The dehumidifying and heating assembly housing includes an upper end surface wall, a lower end surface wall, and side walls connecting the upper end surface wall with the lower end surface wall. In an advantageous technical solution, the dehumidifying and heating assembly housing is configured to be a fan-shaped body having a fan-shaped cross section, and hence has a fan-shaped upper end surface wall, a fan-shaped lower end surface wall, radial side walls extending radially, and a circumferential side wall extending circumferentially. Particularly advantageously, the fan-shaped body and the rotary wheel housing, in particular the rotary wheel upper housing in the rotary wheel housing, are configured to have complementary shapes. For example, the rotary wheel upper housing in the rotary wheel housing is configured with a fan-shaped notch that has a shape substantially the same as that of the fan-shaped body. Preferably, the radius of the fan-shaped body is substantially equal to the radius of the rotary wheel housing. A dehumidifying airflow outlet is configured in either the upper end surface wall or the lower end surface wall, which faces the moisture-absorbing rotary wheel assembly, such that the airflow can flow into the moisture-absorbing rotary wheel assembly by means of the dehumidifying airflow outlet. The dehumidifying airflow outlet should be configured as large as possible so as to maximize flowing through efficiency of the airflow. One or more dehumidifying airflow inlets are configured in the side walls. When the dehumidifying airflow inlet is arranged in the circumferential side wall of the fan-shaped body, the dehumidifying airflow can enter the dehumidifying and heating assembly in the shortest path. When the dehumidifying airflow inlet is arranged in the radial side wall of the fan-shaped body, the dehumidifying airflow can radially pass through the moisture-absorbing rotary wheel assembly more evenly. In particular, when a plurality of dehumidifying airflow inlets is arranged in the two radial side walls of the fan-shaped body or arranged in the two radial side walls and one circumferential side wall of the fan-shaped body, the dehumidifying airflow can pass through the moisture-absorbing rotary wheel assembly more evenly in the cross section range of the fan-shaped body, thereby improving the regeneration efficiency of the moisture-absorbing rotary wheel assembly.

The dehumidifying and heating assembly housing may be integrally manufactured with the rotary wheel housing, but, more preferably, the dehumidifying and heating assembly housing is manufactured independently of the rotary wheel housing and is fixed onto the rotary wheel housing. In an advantageous technical solution, a preferably flexible connection sealing member is disposed between the dehumidifying and heating assembly housing separately manufactured independently of the rotary wheel housing and the rotary wheel housing, in particular the rotary wheel upper housing, so as to prevent the dehumidifying airflow from escaping from a gap between the dehumidifying and heating assembly housing and the rotary wheel housing. Preferably, a connecting and heat-insulating member is further disposed between the dehumidifying and heating assembly housing and the rotary wheel housing to reduce the heat diffusing outward from the dehumidifying and heating assembly housing, in particular heat diffusion toward the moisture-absorbing region in the rotary wheel housing. The connecting and heat-insulating member is at least partially covered by the connection sealing member. More advantageously, the connecting and heat-insulating member is entirely covered by the connection sealing member such that the dehumidifying and heating assembly housing and the rotary wheel housing are both in contact only with the connection sealing member to improve the sealing effect. Preferably, the connection sealing member and/or the connecting and heat-insulating member have/has an inner edge matching the shape of the dehumidifying airflow outlet in the dehumidifying and heating assembly housing. The connection sealing member is preferably configured as foam, silica gel, or soft rubber. The connecting and heat-insulating member is preferably made of a heat-insulation material. However, it is also possible to contemplate manufacture of the connecting and heat-insulating member by a low-cost metal or alloy. Here, although with a better heat-conducting property, the metal or alloy still has a heat-insulation effect after being covered by the connection sealing member.

A dehumidifying and heating member in the dehumidifying and heating assembly is configured as a heating pipe or PTC heating body preferably spread in one plane. Advantageously, the heating pipe is configured in a snake-like or corrugated shape. In particular advantageously, an area defined by envelope lines of the dehumidifying and heating member accounts for at least 70% of the cross section of the dehumidifying airflow outlet, and/or the area of the cross section of the dehumidifying and heating member only accounts at most for 40% of the cross section of the dehumidifying airflow outlet.

In some technical solutions, the dehumidifying and heating assembly further includes a mesh plate. The mesh plate has a shape matching the dehumidifying airflow outlet and may be fixed in the dehumidifying airflow outlet. A plurality of through holes is configured in the mesh plate and distributed in the mesh plate as evenly as possible. Advantageously, the plurality of through holes is distributed in the mesh plate in a snake-like or corrugated shape. Particularly advantageously, the apertures of the plurality of through holes gradually decrease or tend to decrease in the flow direction of the dehumidifying airflow. The apertures of the through holes closer to the dehumidifying airflow inlet are larger, and the apertures of the through holes further away from the dehumidifying airflow inlet are smaller. Hence, the evenness of the dehumidifying airflow in passing through the moisture-absorbing rotary wheel assembly can be further improved.

In some technical solutions, the dehumidifying and heating member is fixed at a downstream side of the mesh plate in the flow direction of the dehumidifying airflow, in particular fixed on an end surface at the downstream side of the mesh plate. Particularly advantageously, the dehumidifying and heating member is configured corresponding to the shape of the through holes in the mesh plate and staggered from the through holes. Particularly advantageously, the dehumidifying and heating member is staggered toward an inflow direction of the dehumidifying airflow with respect to the through holes such that the dehumidifying airflow directly faces the dehumidifying and heating member after passing through the through holes, thereby improving the heating efficiency.

In some technical solutions, the dehumidifying and heating assembly further includes a temperature-controller mounting part. The temperature-controller mounting part is configured to detect temperature in the inner cavity of the dehumidifying and heating assembly. A controller of the integrated washer-dryer controls the dehumidifying and heating member based on the temperature detected by the temperature controller. Since the heated dehumidifying airflow easily forms an eddy flow or a turbulent flow in the inner cavity of the dehumidifying and heating assembly, this leads to an extremely unstable or jumping inner-cavity temperature that is directly acquired from the space in the inner cavity. In order for the inner-cavity temperature to remain as stable as possible, the temperature-controller mounting part preferably includes a heat-conducting sheet and a temperature controller. Particularly preferably, the heat-conducting sheet at least partially covers the temperature controller. Compared with the inner-cavity temperature directly detected from a gas in the inner cavity, a more stable and representative inner-cavity temperature can be detected by transferring the temperature to the temperature controller via the heat-conducting sheet, and this is particularly advantageous to the temperature control of the dehumidifying and heating member. In an advantageous technical solution, the temperature-controller mounting part is arranged on an end surface wall where the holes are located and is arranged outside the holes.

The aforementioned dehumidifying and condensing assembly includes a dehumidifying and condensing assembly housing, an integrated dehumidifying and condensing pipe, and a dehumidifying and condensing water outlet pipe. The integrated dehumidifying and condensing pipe is fixed in the middle of the dehumidifying and condensing assembly housing and is configured to condense and dehumidify the dehumidifying airflow flowing through the integrated dehumidifying and condensing pipe. The condensed water is discharged via the dehumidifying and condensing water outlet pipe. In order to prevent the dehumidifying airflow from bypassing, after entering the dehumidifying and condensing assembly housing, the integrated dehumidifying and condensing pipe and directly flowing to an outlet in the dehumidifying and condensing assembly housing from a gap between the integrated dehumidifying and condensing pipe and the dehumidifying and condensing assembly housing, a baffle is disposed between the integrated dehumidifying and condensing pipe and the dehumidifying and condensing assembly housing.

The drying module assembly may further include a moisture-absorbing and heating assembly arranged in the path of the moisture-absorbing passage. The moisture-absorbing and heating assembly is configured to heat the moisture-absorbing airflow to increase the temperature of the moisture-absorbing airflow, thereby improving the drying efficiency. Particularly advantageously, the moisture-absorbing and heating assembly is arranged near the air outlet of the moisture-absorbing passage of the drying module assembly to heat the air dried by the moisture-absorbing and heating assembly, thereby preventing the evaporated water from condensing on the inner wall of the moisture-absorbing passage. The moisture-absorbing and heating assembly can determine whether to heat and determine the heating power according to a detected value of the temperature sensor.

In some technical solutions, the drying module assembly includes a moisture-absorbing and condensing assembly arranged in the path of the moisture-absorbing passage. The moisture-absorbing and condensing assembly is configured for performing additional condensing and dehumidifying on the moisture-absorbing airflow. Particularly advantageously, the moisture-absorbing and condensing assembly is arranged near the air inlet of the moisture-absorbing passage of the drying module assembly to pre-humidify a hot and humid air from the drum, thereby improving the drying efficiency.

In some technical solutions, a moisture-adsorbing and filtering part is disposed upstream of the moisture-absorbing and dehumidifying component in the moisture-absorbing passage, in particular at the air inlet of the moisture-absorbing passage, such that impurities in the moisture-absorbing airflow are filtered away, thereby protecting the moisture-absorbing passage, in particular the moisture-absorbing and dehumidifying component, from impurity pollution.

In some technical solutions, the drying module assembly may be configured modularly. In some technical solutions, the drying module assembly may consist of a plurality of functional modules assembled separately. These functional modules may be fixed on an outer housing of the drum and/or a rack of the integrated washer-dryer, respectively. Preferably, the moisture-absorbing and dehumidifying component is fixed on the rack of the integrated washer-dryer and is not in contact with the drum. Hence, it is ensured that the stable operation of the moisture-absorbing and dehumidifying component will not be affected by vibration of the drum during operation. The advantages of this technical solution lie in that the inner space inside the outer housing of the integrated washer-dryer can be fully utilized and the shape design of each functional module is also more flexible.

In another alternative preferred technical solution, the drying module assembly may be pre-assembled into only one pre-assembled module, in particular before the assembling of the complete integrated washer-dryer. The pre-assembled module may include only one integrally formed lower module housing and a plurality of split upper housings. The lower module housing and the upper housings together form a plurality of chambers that are configured to accommodate one or more of respective functional assemblies-for example, the moisture-absorbing rotary wheel assembly, the fan for the moisture-absorbing passage, the fan for the dehumidifying passage, the rotary wheel driving mechanism, the moisture-absorbing and heating assembly, the moisture-absorbing condensing assembly, the dehumidifying and heating assembly, and the dehumidifying and condensing assembly. This kind of integrated modular manufacturing greatly simplifies assembling and thus improves assembling efficiency on the one hand, and eliminates or shortens the corresponding connection pipeline on the other hand, thereby enabling a more compact structure of the drying module assembly.

In some technical solutions, a plurality of, preferably four, hangers is integrally formed or fixed to the peripheries/periphery of the upper housings and/or lower housing of the drying module assembly. The hangers are fixed via lap joint on the rack of the integrated washer-dryer, in particular at a fixed part on an inner wall surface of the rack or at a side edge, preferably at least three side edges, further preferably four side edges of the rack, so as to fix the drying module assembly on the rack of the integrated washer-dryer. The fixing via lap joint can be implemented by virtue of threaded fasteners, welding, and/or snap j oint, etc. Particularly advantageously, when the drying module assembly has only one integrally formed lower housing, a plurality of, preferably four, hangers is integrally formed or fixed to the periphery of the lower housing. It should be noted that the drying module assembly at the assembled position does not contact the drum. Hence, the functional modules in the drying module assembly are avoided from being seriously affected by the vibration of the drum. This is very advantageous to the drying module assembly based on the moisture-absorbing and dehumidifying component provided by the present disclosure, since the vibration may lead to unstable rotation of the wheel disc in the moisture-absorbing rotary wheel assembly and thereby collide with the rotary wheel housing or the assembly fixed onto the rotary wheel housing, and may also lead to a seal failure that will cause the airflow to escape from the predetermined flow path.

In some technical solutions, the drying module assembly may be arranged above, behind, or below the drum. It is particularly advantageous to arrange the drying module assembly above the drum, since a larger space for accommodating the functional assemblies in the drying module assembly is reserved laterally above the drum, which is a horizontally arranged cylinder, and arranging the drying module assembly above the drum is more convenient for assembly and maintenance.

In order to minimizing the height or thickness of the integrated washer-dryer, the present disclosure further provides a preferred technical solution in which an axis of rotation of the moisture-absorbing rotary wheel assembly and an axis of rotation of the fan for the moisture-absorbing passage are both heteroplanar with and perpendicular to the axis of rotation of the drum, and are distributed on two sides of the axis of rotation of the drum. Particularly advantageously, the moisture-absorbing rotary wheel assembly, the fan for the moisture-absorbing passage, the fan for the dehumidifying passage, and the rotary wheel driving mechanism, as well as, if necessary, the moisture-absorbing condensing assembly, the dehumidifying and condensing assembly, and the dehumidifying and heating assembly are all arranged side by side, and thus substantially arranged in the same plane, i.e., at least partially overlapped, without complete staggering, in the direction of the axis of rotation of the moisture-absorbing rotary wheel assembly. Hence, the height or thickness of the drying module assembly as a whole can be minimized.

Particularly advantageously, the air outlet of the fan for the moisture-absorbing passage is in fluid communication with the inner cavity of the rotary wheel housing by means of a moisture-absorbing airflow inlet in the circumferential side wall of the rotary wheel housing. The air outlet of the fan for the moisture-absorbing passage and the moisture-absorbing airflow inlet of the rotary wheel housing are directly connected to each other, or indirectly connected to each other by virtue of an air-opening connecting part. Preferably, the moisture-absorbing airflow inlet is arranged on the circumferential side wall of the rotary wheel housing between the moisture-absorbing rotary wheel assembly and the bottom of the rotary wheel housing and may be also arranged between the moisture-absorbing rotary wheel assembly and the top of the rotary wheel housing. Particularly preferably, the air outlet of the fan for the moisture-absorbing passage is configured to be open in a direction perpendicular to the axis of rotation of the moisture-absorbing rotary wheel assembly.

Similarly, particularly advantageously, the air outlet for the fan for the dehumidifying passage is in fluid communication with the inner cavity of the rotary wheel housing by means of a dehumidifying airflow inlet configured in the circumferential side wall of the rotary wheel housing. The air outlet of the fan for the dehumidifying passage and the dehumidifying airflow inlet of the rotary wheel housing are directly connected to each other, or indirectly connected to each other by virtue of an air opening connecting part. Preferably, the dehumidifying airflow inlet is arranged in the circumferential side wall of the rotary wheel housing between the moisture-absorbing rotary wheel assembly and the top of the rotary wheel housing and may be also arranged between the moisture-absorbing rotary wheel assembly and the bottom of the rotary wheel housing. Particularly preferably, the air outlet of the fan for the dehumidifying passage is configured to be open in a direction perpendicular to the axis of rotation of the moisture-absorbing rotary wheel assembly.

In an alternative technical solution, the air outlet of the fan for the dehumidifying passage and the dehumidifying airflow inlet in the dehumidifying and heating assembly housing are connected to each other directly or indirectly by virtue of the air opening connecting part, and the dehumidifying and heating assembly housing is integrally formed on or fixed onto the rotary wheel housing. The dehumidifying and heating assembly housing may have one or more dehumidifying airflow inlets that may be arranged in the side wall of the dehumidifying and heating assembly housing. The side wall herein refers to a housing wall angularly connected to an end surface wall extending perpendicular to the axis of rotation of the moisture-absorbing rotary wheel assembly. In particular, when the dehumidifying and heating assembly housing is configured to be the fan-shaped body having the fan-shaped cross section, the dehumidifying airflow inlet can be configured in the circumferential side wall and/or radially extending radial side wall of the fan-shaped body. Particularly preferably, the air outlet of the fan for the dehumidifying passage is configured to be open in a direction perpendicular to the axis of rotation of the moisture-absorbing rotary wheel assembly.

Furthermore, in an alternative technical solution, the moisture-absorbing rotary wheel assembly is fixed onto the rotary wheel housing and thereby does not rotate relative to the rotary wheel housing. Here, the rotary wheel housing is no longer divided into different regions. The moisture-absorbing rotary wheel assembly is alternately communicated with the moisture-absorbing passage and the dehumidifying passage. Specifically, when the drying module assembly operates, the moisture-absorbing rotary wheel assembly is first communicated with the moisture-absorbing passage to perform moisture-absorbing drying on clothes in the drum. After that, when it is determined that the wheel disc in the moisture-absorbing rotary wheel assembly reaches saturation based on, for example, information from a sensor connected to the moisture-absorbing rotary wheel assembly, the moisture-absorbing rotary wheel assembly is enabled to be communicated with the dehumidifying passage by using a switching structure, thereby achieving regeneration of the wheel disc of the moisture-absorbing rotary wheel assembly. In this technical solution, the rotary wheel driving mechanism, dynamic sealing members (for example, the sealing member of the rotary wheel and the sealing member of the rotary wheel housing as previously described for forming a dynamic seal), rotation auxiliary members (for example, the circumferential roller mechanism, the bottom roller mechanism, and the auxiliary rotating ring as previously described) and the like that are arranged due to the rotation of the wheel disc can be omitted, thereby achieving the purpose of reducing the cost.

It may be also contemplated that the moisture-absorbing rotary wheel assembly is fixed onto the rotary wheel housing, but the rotary wheel housing is still divided into at least two regions that are alternately communicated with the moisture-absorbing passage and the dehumidifying passage. In some technical solutions, a pipeline frame capable of swinging and rotating in a reciprocating way is disposed on the outer periphery of the rotary wheel housing. A flexible pipeline is connected between the pipeline frame and the moisture-absorbing passage and between the pipeline frame and the dehumidifying passage, respectively. When the pipeline frame swings and rotates in a reciprocating way, pipeline ports in the pipeline frame are communicated with the inlets and outlets in the at least two regions, respectively.

The integrated washer-dryer further includes an air outlet pipeline, a cleaner holding box, and a pipe assembly, and the air outlet pipe is disposed between the air outlet of the drum and the air inlet of the drying module assembly and configured to guide an airflow from the drum to the drying module assembly.

The pipe assembly includes a water inlet pipe, a first water outlet pipe, a second water outlet pipe, and a third water outlet pipe. One end of the water inlet pipe is connected to a tap water pipe, and the other end of the water inlet pipe is connected to one end of the first water outlet pipe, one end of the second water outlet pipe, and one end of the third water outlet pipe, respectively. The other end of the first water outlet pipe is connected to a water inlet of a condenser in the integrated washer-dryer; the other end of the second water outlet pipe is connected to a water inlet of the cleaner holding box; and the other end of the third water outlet pipe is connected to a water inlet of the air outlet pipeline. In some technical solutions, the condenser, the cleaner holding box, the water inlet of the air outlet pipeline and the pipe assembly are arranged at the upper part of the drum. The condenser, the cleaner holding box, the water inlet of the air outlet pipeline, and the pipe assembly are preferably at least arranged at three corners of the integrated washer-dryer, respectively. In some technical solutions, the water inlet pipe and/or the first water outlet pipe and/or the second water outlet pipe and/or the third water outlet pipe are/is provided with an electromagnetic valve to control the on/off and/or flow of a water pipe. In some embodiments, the pipe assembly and the electromagnetic valve are configured as an integrated structure. In some technical solutions, the water inlet pipe and the tap-water pipe are connected by means of a hose, and/or the first water outlet pipe and a water inlet of the condenser are connected by means of a hose, and/or the second water outlet pipe and a water inlet of the cleaner holding box are connected by means of a hose, and/or the third water outlet pipe and a water inlet of the air outlet pipeline are connected by means of a hose. In some technical solutions, a filter for filtering water flowing through the water inlet pipe is disposed in the water inlet pipe. In some technical solutions, a water outlet of the cleaner holding box is connected to the water inlet of the drum, and the water outlet of the drum is connected to a water drainpipe. In some technical solutions, a filter screen and a sprinkling mechanism for sprinkling the filter screen are disposed in the air outlet pipeline; the air outlet pipeline includes a first water inlet configured to guide water to the sprinkling mechanism; and the third water outlet pipe is connected to the first water inlet. In some technical solutions, the air outlet pipeline includes a second water inlet for guiding cooling water into the cooling passage; the cooling passage is configured to guide the cooling water to flow to an outer wall of the air outlet pipeline so as to cool the outer wall; and the third water outlet pipe is connected to the second water inlet. By the provision of a complex waterway system with one inlet and multiple outlets, the water-supply requirement of a plurality of assemblies for optimizing the drying effect and better protecting the drying module assembly can be met, and thus an adaptability to the requirements of the more perfect integrated washer-dryer is provided.

The air outlet pipeline is configured to guide an airflow flowing from the drum to the drying module assembly. The air outlet pipeline extends from bottom up along an outer surface of a rear wall of the drum. The air outlet pipeline may be disposed at the rear left side or the rear right side. As compared with the extension of the air outlet pipeline along an outer surface of an upper side wall of the drum, the extension of the air outlet pipeline along the outer surface of the rear wall of the drum can reduce the overall height of the integrated washer-dryer and allow more space reserved above the drum to facilitate the arrangement of a plurality of components of the drying module assembly. The air outlet pipeline is preferably flexibly connected to an air inlet of the drying module assembly.

Particularly advantageously, a filtering module assembly is disposed in the air outlet pipeline. The filtering module assembly includes a filter screen for filtering an airflow flowing through the air outlet pipeline. The use of the filter screen in the air outlet pipeline may prevent lint and other foreign matters entrained in the airflow from entering the drying module assembly to subsequently affect the dehumidifying and heating effect and further the drying effect. In some technical solutions, the filter screen is obliquely disposed in the air outlet pipeline. An included angle between the filter screen and a longitudinal axis of the air outlet pipeline ranges, for example, from 15° to 45°. Preferably, the filter screen traverses across the whole section of the air outlet pipeline to filter all the airflow flowing through the air outlet pipeline. In some technical solutions, the filter screen is detachably disposed in the air outlet pipeline that is provided with an opening at a position corresponding to the filter screen so as to mount and remove the filter screen. In some technical solutions, the air outlet pipeline is bent; a first end of the air outlet pipeline is provided with an air inlet for connecting to the air outlet of the drum; and a second end of the air outlet pipeline is provided with an air outlet for connecting to the air inlet of the drying module assembly. In some technical solutions, the air outlet pipeline includes a first-half housing and a second-half housing to define a cavity, in which the filter screen is obliquely disposed, such that all the airflow flowing from the first end to the second end of the air outlet pipeline can be filtered. In some technical solutions, the filter screen obliquely extends from a lower part of the second half housing to an edge of a support plate that is disposed at the upper part of the first half housing and extends into the cavity, such that the filter screen traverses across at least 90%, preferably at least 95%, of the cross section of the cavity; and a mounting part for sealing mounting of a water outlet device of the filter screen self-cleaning device is disposed on the support plate. In some technical solutions, the support plate is cambered, with one end mounted on a top panel of the first half housing and the other end extending into the cavity for fixing the filter screen. In some technical solutions, the support plate has a flat plate form, is integrally formed with the first half housing, and extends into the cavity. In some technical solutions, the first half housing and the second half housing each have a cambered segment starting from the first end and a straight segment connected to the cambered segment, and the cambered segments of the first and second half housings gradually widen from the first end to the straight segments of the first and second half housings, respectively.

The filtering module assembly may further include a filter screen self-cleaning device for cleaning the filter screen. In some technical solutions, the filter screen self-cleaning device is disposed at one end of the air outlet pipeline away from the drum. In some technical solutions, the filter screen self-cleaning device includes a fluid supply pipe and a nozzle connected to the fluid supply pipe. The nozzle is configured to dispense a cleaning fluid to an air intake surface of the filter screen. In some technical solutions, the fluid supply pipe and the nozzle are connected to each other to form a venturi tube form. In some technical solutions, a flat opening is formed at a free end of the nozzle. In some technical solutions, the width of the flat opening is at least 90% of, preferably equal to, the width of the filter screen. In some technical solutions, an included angle between the nozzle and the filter screen ranges from 0° to 45°. In some technical solutions, a plurality of passages is formed inside the nozzle such that the cleaning fluid is dispensed in the width direction of the flat opening. In some technical solutions, the filter screen self-cleaning device further includes a vibration mechanism for vibrating the filter screen, and/or a blowing mechanism for blowing the filter screen, and/or a sweeping mechanism for sweeping the filter screen. In some technical solutions, the fluid supply pipe extends along the inner surface of the air outlet pipeline to a middle site of the filter screen. In some technical solutions, the fluid supply pipe extends in a length direction of the inner surface of the air outlet pipeline and is fixed on the inner surface; and the nozzle includes a plurality of rotatable nozzles that are connected to the fluid supply pipe at intervals so as to spray the fluid to the air intake surface of the filter screen. In some technical solutions, a pressurizing structure is disposed in the fluid supply pipe. In some technical solutions, the water inlet pipe extends along the whole length of the inner wall of the air outlet pipeline, and the nozzle includes a plurality of autorotation sprinklers that are connected to the water inlet pipe at intervals so as to spray water to the air intake surface of the filter screen. In some technical solutions, an air inlet of the filter screen self-cleaning device and an air inlet of the air outlet pipeline are located at two opposing ends of the filter screen, and a water outlet of the filter screen self-cleaning device and the air inlet of the air outlet pipeline are located on the same side of the filter screen. In some technical solutions, the water inlet of the filter screen self-cleaning device is connected to a tap water inlet pipe of the integrated washer-dryer by means of a water guiding pipe. In some technical solutions, the water inlet of the filter screen self-cleaning device is directly connected to an adjacent tap-water inlet pipe by means of an adapter. In some technical solutions, the air outlet pipeline is located on the side of the drum away from the tap-water inlet pipe, and the water-guiding pipe communicating the water inlet of the filter screen self-cleaning device with the tap-water inlet pipe traverses across the drum. In some technical solutions, the air outlet pipeline, the tap-water inlet pipe, and the adapter therebetween are located on approximately the same side of the drum. In some technical solutions, the filter screen self-cleaning device includes a sprinkling mechanism for sprinkling the filter screen, and/or a vibration mechanism for vibrating the filter screen, and/or a blowing mechanism for blowing the filter screen, and/or a sweeping mechanism for sweeping the filter screen. The sprinkling mechanism is configured to enable the water to flow to an actual filtering surface of the filter screen. In some technical solutions, the filter screen is detachably disposed in the air outlet pipeline. Preferably, the filter screen is obliquely disposed within the straight segments of the first and second half housings. Preferably, the filter screen is flexible and obliquely extends from the cambered segment of the first half housing to the edge of the support plate that is disposed on the straight segment of the second half housing and extends into the cavity.

In another alternative technical solution, the filter screen can be manually cleaned. In some technical solutions, the air outlet pipeline includes a first segment connected to the drum, a second segment connected to the drying module assembly, and a filter screen arrangement segment connecting the first segment with the second segment, so as to guide an airflow from the drum to the drying module assembly. The filter screen arrangement segment may be accessed outside from the housing of the integrated washer-dryer so as to operate the filter screen arrangement segment. In some technical solutions, a front panel, a side panel, or a rear panel of the integrated washer-dryer is provided with a first closeable opening for accessing the filter screen arrangement segment. In some technical solutions, at least one filter screen is mounted in a filter cartridge that is removably and hermetically mounted to the filter screen arrangement segment and thus is in fluid communication with the first segment and the second segment to form the air outlet pipeline. In some technical solutions, the filter cartridge is flexible and is mounted to the filter screen arrangement segment in an interference fit manner. In some technical solutions, the filter cartridge is rigid and is mounted to the filter screen arrangement segment by means of snap fit. In some technical solutions, the filter screen arrangement segment includes a second closeable opening to open and close the filter screen arrangement segment. In some technical solutions, at least one filter screen is removably or fixedly mounted directly inside the filter screen arrangement segment, or at least one filter screen is mounted inside the filter cartridge, and the filter cartridge is removably and hermetically mounted to the filter screen arrangement segment. In some technical solutions, the second closeable opening is opened or closed by means of a sliding plate or a rotary flip plate. In some technical solutions, at least one filter screen is inserted into a slot in the filter screen arrangement segment in a close fit manner, or the filter cartridge is removably attracted inside the filter screen arrangement segment by means of a magnet. In some technical solutions, at least one filter screen is obliquely disposed on the filter screen arrangement segment. In some technical solutions, at least one filter screen is disposed on the filter screen arrangement segment in such a way of being perpendicular to the longitudinal axis of the filter screen arrangement segment.

Furthermore, the integrated washer-dryer further includes a cooling passage for cooling an airflow flowing through the air outlet pipeline. In some embodiments, an outer pipe sleeves the air outlet pipeline to form the cooling passage between the outer wall of the air outlet pipeline and an inner wall of the outer pipe. In some embodiments, at least part of a housing of the air outlet pipeline includes two layers of walls between which the cooling passage is formed. In some embodiments, the cooling passage covers at least part of the air outlet pipeline. In some embodiments, the cooling passage includes a first water inlet for guiding cooling water into the cooling passage, and a first water draining port for draining the cooling water. In some embodiments, a water spray nozzle connected to the first water inlet is further provided. The water spray nozzle is configured to spray the cooling water to the outer wall of the air outlet pipeline. In some embodiments, the cooling passage is a spiral passage disposed in the outer wall of the air outlet pipeline. In some embodiments, a thin rib is disposed on an outer surface of the cooling passage, and an airflow blown from the air blower flows to the thin rib. In some embodiments, the air outlet pipeline is provided with a temperature sensor and/or humidity sensor for detecting the temperature and/or humidity of the air flowing through the air outlet pipeline. In some embodiments, a filter screen and a sprinkling mechanism for sprinkling the filter screen are disposed in the air outlet pipeline; and the air outlet pipeline includes a second water inlet for guiding water into the sprinkling mechanism. In some embodiments, a cold-water pipe is disposed upstream and/or downstream of the filter screen in the air outlet pipeline. In some embodiments, a condenser is disposed between the drum and the air outlet pipeline and/or between the drying module assembly and the air outlet pipeline.

The integrated washer-dryer provided by the present disclosure may further include a controller. The controller can start a laundry and/or drying program according to an operation performed by a user by virtue of display and operation devices disposed on the outer housing of the integrated washer-dryer. Advantageously, a temperature sensor and/or a humidity sensor are/is disposed inside the drum to detect the temperature and/or humidity inside the drum. Further advantageously, one or more temperature sensors is/are disposed inside the moisture-absorbing passage and/or a regenerating passage. Particularly advantageously, a temperature-controller mounting part is disposed in a regenerating and heating assembly and includes a heat-conducting sheet and a temperature controller wrapped by the heat-conducting sheet. Similarly advantageously, temperature sensors are disposed upstream and downstream of a regenerating and condensing assembly, respectively. The controller can control the power of the moisture-absorbing and heating assembly and/or the dehumidifying and heating assembly according to detected data from the aforementioned sensors. Here, particularly advantageously, the controller controls the power of the moisture-absorbing and heating assembly and/or the dehumidifying and heating assembly according to the detected data from the aforementioned sensors to allow the wheel disc of the moisture-absorbing rotary wheel assembly to work in an appropriate temperature range, thereby preventing the moisture-absorbing property of the wheel disc from degeneration caused by an over-high temperature.

The integrated washer-dryer may further include at least two drums for accommodating clothes, the aforementioned drying module assembly, and optionally the filtering module assembly, with each drum including an air inlet passageway and an air outlet passageway. The drying module assembly alternatively performs drying on the clothes in the drums. Preferably, the air inlet of the moisture-absorbing passage is alternatively in fluid communication with the air outlet passageways of the drums, and the air outlet of the moisture-absorbing passage is correspondingly in fluid communication with the air inlet passageways of the drums.

In some technical solutions, the drying module assembly is optionally in fluid communication with any one of the drums by means of a switching mechanism. The switching structure at least includes a first switching mechanism and a second switching mechanism, and the air inlet passageway of each drum is connected to the air outlet of the moisture-absorbing passage by means of the first switching mechanism, and the air outlet passageway of each drum is connected to the air inlet of the moisture-absorbing passage by means of the second switching mechanism. In an optional technical solution, the filtering module assembly is disposed between the second switching mechanism and the moisture-absorbing and dehumidifying component. In an optional technical solution, the second switching mechanism is disposed at a connection between the air inlet of the moisture-absorbing passage and the air outlet passageway of the drum. In an optional technical solution, there may be more than one second switching mechanism that is disposed inside the air outlet passageway of the drum, respectively. In an optional technical solution, there is more than one filtering module assembly that is disposed on the air outlet passageway of the drum, respectively, and located upstream or downstream of the second switching mechanism. According to the technical solutions described above, the plurality of drums shares the same drying module assembly, which can simplify the structure and reduce the volume and cost of the apparatus.

As compared with the exhaust-type integrated washer-dryer that is less commonly used, the integrated washer-dryer provided by the present disclosure has numerous advantages such as low energy consumption, high efficiency, low noise, and low drying temperature. Compared with the condensation-type and heat-pump-type integrated washer-dryers that are more common now, the integrated washer-dryer provided by the present disclosure uses the moisture-absorbing and dehumidifying component with a dehumidifying capability to absorb the moisture in the drum, thereby eliminating expensive components such as the heat pump and thus greatly reducing the cost. Meanwhile, this moisture-absorbing and dehumidifying component with the dehumidifying capability mainly works by using the moisture-absorbing and dehumidifying properties of its material and/or structure rather than based on the temperature difference, which thus greatly reduces the sensitivity of the drying module assembly to the ambient temperature and thereby improves the adaptability to the environment. That is, the integrated washer-dryer provided by the present disclosure can maintain relatively stable energy consumption and drying efficiency in various temperature environments. Furthermore, the technical solutions provided by the present disclosure further reduce the drying temperature, such that it is applicable to drying of clothes made of more varieties of materials while protecting the clothes from damage.

The drying module assembly, which is also the subject matter of the present disclosure, can encompass a single feature or a combination of more features related thereto as described above, and thus has the same or similar advantages as the integrated washer-dryer according to the present disclosure.

### BRIEF DESCRIPTION OF THE DRAWINGS

The embodiments of the integrated washer-dryer provided by the present disclosure will be described below with reference to the accompanying drawings to facilitate understanding of the present disclosure. It should be noted that the present disclosure may also be implemented in a variety of other combinations of the features mentioned above and is not only limited to the embodiments as illustrated and described.

In the accompanying drawings:
FIG. 1 shows a perspective view from the front side of an integrated washer-dryer, according to a first embodiment of the present disclosure;
FIG. 2 shows a perspective view from the back side of the integrated washer-dryer, according to the first embodiment of the present disclosure;
FIG. 3 shows a perspective view of a drying module assembly in the integrated washer-dryer, according to the first embodiment of the present disclosure;
FIG. 4 shows a schematic diagram of a flow path of a moisture-absorbing airflow in the integrated washer-dryer, according to the first embodiment of the present disclosure;
FIG. 5 shows a schematic diagram of a flow path of a dehumidifying airflow in the integrated washer-dryer, according to the first embodiment of the present disclosure;
FIG. 6 shows an exploded view of a moisture-absorbing and dehumidifying component in the integrated washer-dryer, according to the first embodiment of the present disclosure;
FIG. 7 shows a perspective view of a moisture-absorbing rotary wheel assembly and a rotary wheel upper housing in the integrated washer-dryer, according to the first embodiment of the present disclosure;
FIG. 8 shows an exploded view of the moisture-absorbing rotary wheel assembly in the integrated washer-dryer, according to the first embodiment of the present disclosure;
FIG. 9 shows a perspective view of a dehumidifying and heating assembly in the integrated washer-dryer, according to the first embodiment of the present disclosure;
FIG. 10 shows a perspective view from the front side of a mesh plate in the dehumidifying and heating assembly of the integrated washer-dryer, according to the first embodiment of the present disclosure;
FIG. 11 shows a perspective view from the back side of the mesh plate in the dehumidifying and heating assembly of the integrated washer-dryer, according to the first embodiment of the present disclosure;
FIG. 12 shows a perspective view of a rotary wheel upper housing not installed with the dehumidifying and heating assembly in the integrated washer-dryer, according to the first embodiment of the present disclosure;
FIG. 13 shows a perspective view of an integrated dehumidifying and condensing pipe of a dehumidifying and condensing assembly in the integrated washer-dryer, according to the first embodiment of the present disclosure;
FIG. 14 shows a perspective view of a cut portion of a dehumidifying and condensing assembly housing of the dehumidifying and condensing assembly in the integrated washer-dryer, according to the first embodiment of the present disclosure;
FIG. 15 schematically shows a perspective view of a pipe assembly in the integrated washer-dryer, according to the present disclosure;
FIG. 16 shows a perspective view of a longitudinal section of an air outlet pipeline provided with a filter screen self-cleaning device in the integrated washer-dryer, according to the present disclosure;
FIG. 17 schematically shows a sectional view, taken along line A-A in FIG. 16, of the filter screen self-cleaning device in the integrated washer-dryer, according to the present disclosure;
FIG. 18 shows a perspective view of an integrated washer-dryer, according to a second embodiment of the present disclosure; and
FIG. 19 shows a perspective view of an integrated washer-dryer, according to a third embodiment of the present disclosure.

### DETAILED DESCRIPTION

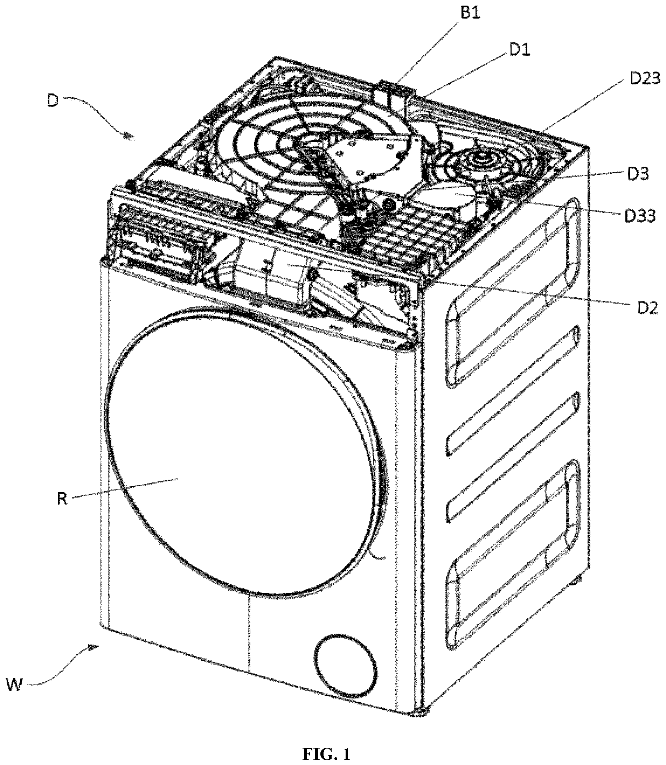

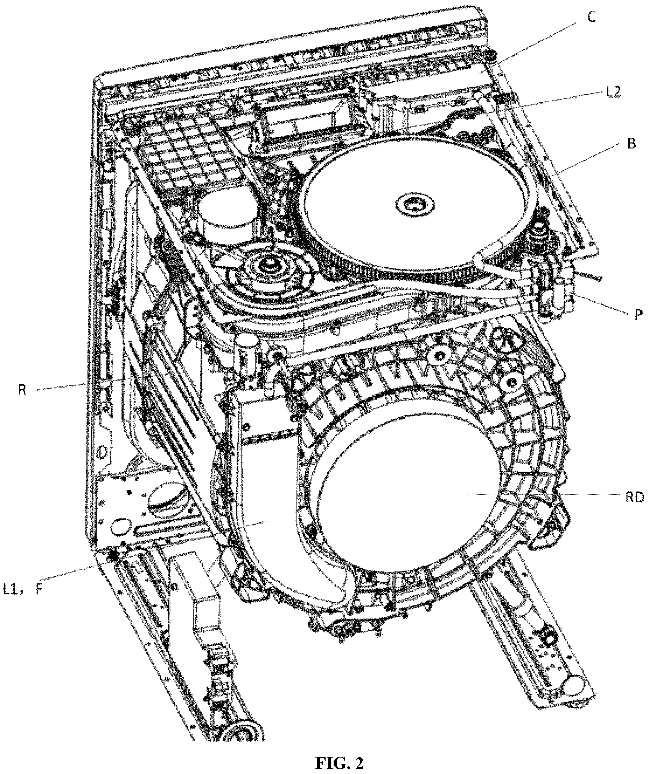

FIGs. 1 and 2 show an integrated washer-dryer, according to a first embodiment of the present disclosure, from the front side and the back side, respectively. For the sake of clarity, part of an outer housing and some of the components and parts of the integrated washer-dryer are omitted in FIGs. 1 and 2. In this embodiment, an integrated washer-dryer W includes a drum R for accommodating washings, a drum-driving part RD for driving the drum R to rotate, a drying module assembly D for drying an inner cavity of the drum, a filtering module assembly F for filtering an airflow entering the drying module assembly D, an air outlet pipeline L1 for communicating an air outlet of the drum R with an air inlet of the drying module assembly D, an air inlet pipeline L2 for communicating an air inlet of the drum R with an air outlet of the drying module assembly D, a pipe assembly P allowing water to pass in and out, a cleaner holding box C for holding a cleaner, a rack B for supporting various functional module assemblies, and a water inlet and a water outlet communicated with the drum R. The integrated washer-dryer W further includes, but is not limited to, an outer housing at least having a clothes-access opening and a cleaner-addition opening, a door for closing the clothes-access opening, display and operation devices arranged on the outer housing, a controller, a water drainpipe and other components, so as to enable the washing and drying functions of the integrated washer-dryer. Specifically, after receiving an instruction input by a user by means of the display and operation devices, the controller controls the integrated washer-dryer W to start its washing and/or drying program(s). In the washing program, clear water flows into the drum R via the water inlet, and an inner drum of the drum R rotates under the drive of the drum-driving part RD, thereby washing and, if necessary, spinning the washings in the drum R by virtue of a centrifugal force. Wastewater in the drum is discharged out of the integrated washer-dryer by means of the water outlet. In the drying program, a circulating airflow is established among the drum R, the drying module assembly D and the filtering module assembly F, in which a humid gas flows to the drying module assembly D from the drum R through the filtering module assembly F and is dried and then delivered back to the drum R. The gas is circulated in such a way to complete the drying of the inner cavity of the drum R, in particular the washings therein.

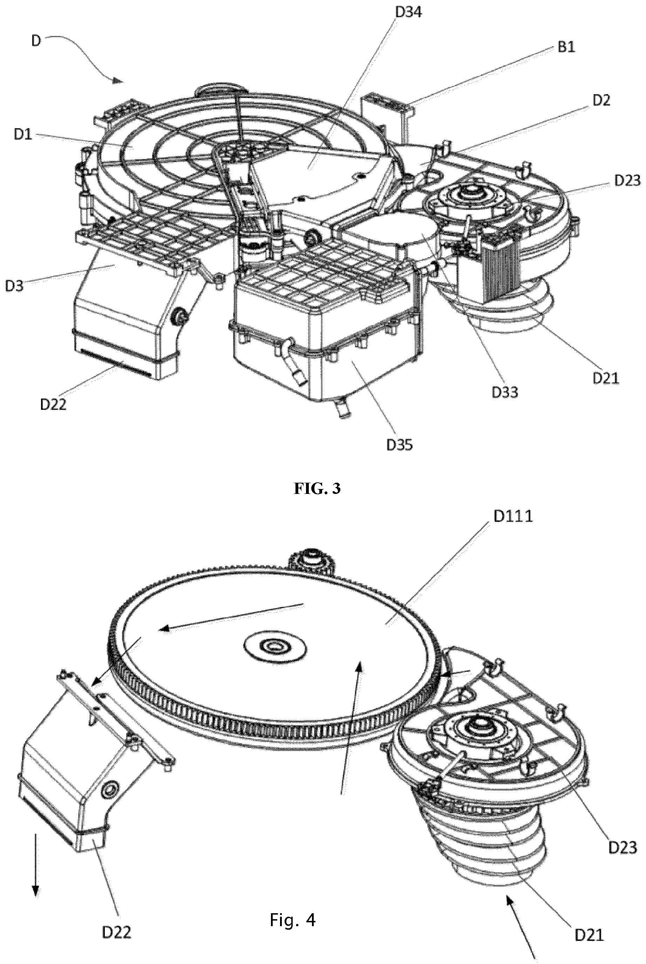

FIG. 3 shows a drying module assembly D in the integrated washer-dryer, according to the first embodiment of the present disclosure. The drying module assembly D includes a moisture-absorbing and dehumidifying component D1, a moisture-absorbing passage D2 and a dehumidifying passage D3. The moisture-absorbing and dehumidifying component D1 includes a moisture-absorbing rotary wheel assembly D11, a rotary wheel housing D12, and a rotary wheel driving mechanism D13. In the moisture-absorbing passage D2, an air inlet D21 of the moisture-absorbing passage, an air outlet D22 of the moisture-absorbing passage, and a fan D23 for the moisture-absorbing passage are provided. In the dehumidifying passage D3, a fan D33 for the dehumidifying passage, a dehumidifying and heating assembly D34, and a dehumidifying and condensing assembly D35 are provided. Furthermore, a moisture-absorbing and heating assembly, a moisture-absorbing and condensing assembly, and/or a moisture-absorbing and filtering assembly may also optionally be provided inside the moisture-absorbing passage D2, and a dehumidifying and filtering assembly may also optionally be provided inside the dehumidifying passage D3.

As shown in FIG. 3, the aforementioned functional modules are connected to each other and are disposed via lap joint on four edges at the top of the rack B of the integrated washer-dryer by means of at least four hangers B1, respectively. This can be clearly seen in FIG. 1. At least three of the at least four hangers B1 are independently manufactured and then connected to the edges of the aforementioned functional modules, and at least another hanger B1 is directly integrally formed with the rotary wheel housing D12 of the moisture-absorbing and dehumidifying component D1. It is also possible to contemplate other numbers of hangers B1 and other forms of connection to the rack B. In summary, the functional modules that have been connected as a whole are directly fixed onto the rack by using the hangers B1, which facilitates the assembling on the one hand, and is also advantageous for reducing the impact of vibration of the drum on the drying module assembly D on the other hand. It is also possible to contemplate fixing these functional modules on the drum and the rack, respectively. Here, particularly advantageously, the moisture-absorbing and dehumidifying component is fixed on the rack.

As shown in FIG. 3, an axis of rotation of the moisture-absorbing rotary wheel assembly D11 taking up a relatively large space and an axis of rotation of the fan D23 for the moisture-absorbing passage are heteroplanar with and generally perpendicular to the axis of rotation of the drum R, and are distributed on two sides of the axis of rotation of the drum R. Particularly advantageously, these functional modules, in particular the moisture-absorbing rotary wheel assembly D11, the rotary wheel driving mechanism D13, the fan D23 for the moisture-absorbing passage, the fan D33 for the dehumidifying passage, the dehumidifying and heating assembly D34, and the dehumidifying and condensing assembly D35, are radially arranged in substantially the same plane side by side. That is, these functional modules at least partially overlap, without complete staggering, in the direction of the axis of rotation of the moisture-absorbing rotary wheel assembly D11.

In this embodiment, the air inlet D21 of the moisture-absorbing passage D2 and the air outlet of the drum R are in fluid communication, and the air outlet D22 of the moisture-absorbing passage D2 and the air inlet of the drum R are in fluid communication. As shown in FIG. 3, an air outlet of the fan D23 for the moisture-absorbing passage is configured to open in a direction perpendicular to the axis of rotation of the moisture-absorbing rotary wheel assembly D11, and, by virtue of an air-opening connecting part, the air outlet is in fluid communication with a moisture-absorbing airflow inlet configured in a circumferential side wall of the rotary wheel housing D12 and is thus in fluid communication with a moisture-absorbing region D1211 of the rotary wheel housing D12. The moisture-absorbing airflow inlet of the rotary wheel housing D12 is arranged on the circumferential side wall of the rotary wheel housing D12 between the moisture-absorbing rotary wheel assembly D11 and the bottom of the rotary wheel housing D12.

As shown in FIG. 3, the dehumidifying passage D3 that is connected end to end is configured to be an inner circulating passage without communication with an ambient environment. The air outlet of the fan D33 for the dehumidifying passage is similarly configured to open in the direction perpendicular to the axis of rotation of the moisture-absorbing rotary wheel assembly D11; and, by virtue of the air-opening connecting part, the air outlet is in fluid communication with a circumferential side wall D3413 of the dehumidifying and heating housing D341 of the dehumidifying and heating assembly D34. The dehumidifying and heating assembly D34 is fixed onto an upper surface of a rotary wheel upper housing D12U of the rotary wheel housing D12 and is configured in a shape complementary to the shape of the upper surface. A dehumidifying airflow outlet is configured in a lower end surface wall D3412 of the dehumidifying and heating assembly housing D341 and is in fluid communication with a dehumidifying region D1212 of the moisture-absorbing rotary wheel assembly D11.

Hence, the drying module assembly D with a compact structure, in particular in the direction of the axis of rotation, is formed, which is very advantageous for reducing the height or thickness of the integrated washer-dryer.

FIG. 4 schematically shows, with arrows, a flow path of a moisture-absorbing airflow in the integrated washer-dryer according to the first embodiment of the present disclosure. When the fan D23 for the moisture-absorbing passage starts, an airflow circularly flows among the drum R, the drying module assembly D, and optionally the filtering module assembly F to form a moisture-absorbing airflow. The fan D23 for the moisture-absorbing passage sucks a humid gas to the air inlet D21 of the moisture-absorbing passage of the drying module assembly D from the drum R via the filtering module assembly F. The humid gas passes through the air inlet D21 of the moisture-absorbing passage per se and is discharged to the moisture-absorbing region between the moisture-absorbing rotary wheel assembly D11 and the bottom of the rotary wheel housing D12. The humid gas passes through the wheel disc D111 in the moisture-absorbing rotary wheel assembly D11 from the bottom up and then turns into a dry gas. The dry gas enters the drum R again by virtue of the air outlet D22 of the moisture-absorbing passage. The process is repeated in such a way to implement the drying of the inner cavity of the drum R.

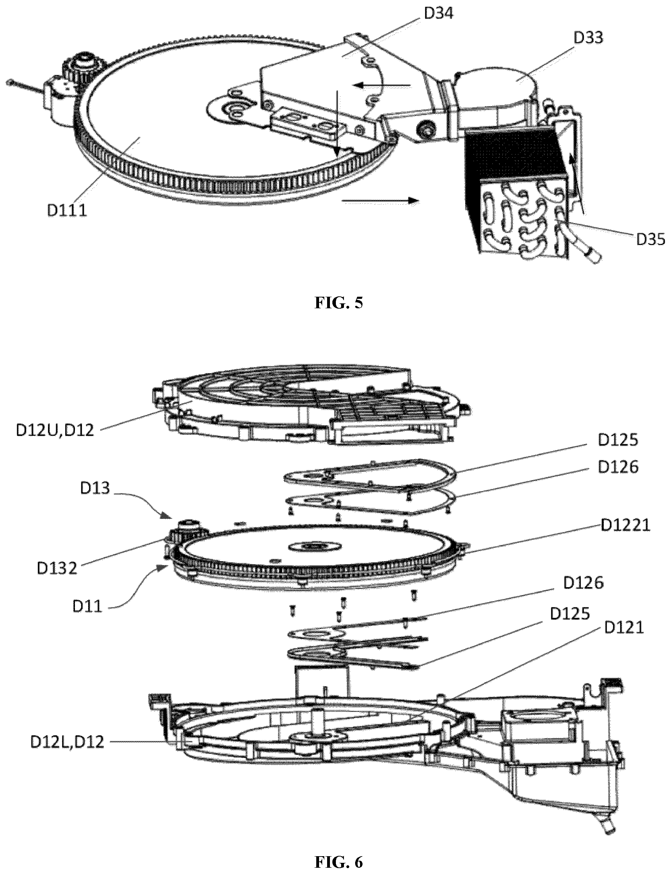

FIG. 5 schematically shows, with arrows, a flow path of a dehumidifying airflow in the integrated washer-dryer according to the first embodiment of the present disclosure. When a fan D33 for the dehumidifying passage starts, the airflow circularly flows inside the dehumidifying passage to form a dehumidifying airflow. The fan D33 for the dehumidifying passage sucks a dry gas flowing out from the dehumidifying and condensing assembly D35 and delivers the dry gas to the dehumidifying and heating assembly D34. After heating, the resulting dry and hot gas enters the dehumidifying region D212, passes through the wheel disc D111 of the moisture-absorbing rotary wheel assembly D11 from the top down, takes away moisture in the wheel disc D111, and turns into a hot and humid gas. The hot and humid gas is then delivered to the dehumidifying and condensing assembly D34 arranged at the downstream side of the moisture-absorbing rotary wheel assembly D11 and is condensed and dehumidified there to turn into a dry and cold gas again. The dry and cold gas is delivered to the moisture-absorbing rotary wheel assembly D11 again. The process is repeated in such a way to implement the regeneration of the wheel disc D111 of the moisture-absorbing rotary wheel assembly D11, thereby continuously maintaining the moisture-absorbing capability of the wheel disc. FIGs. 4 and 5 show the examples of the flow directions of the airflows in the moisture-absorbing passage and the dehumidifying passage. In practice, it is also possible that the airflow in the moisture-absorbing passage passes through the wheel disc D111 from the top down, and the airflow in the dehumidifying passage passes through the wheel disc D111 from the bottom up; or the airflows simultaneously pass through the wheel disc D111 from the top down or from the bottom up. The present disclosure is not limited thereto.

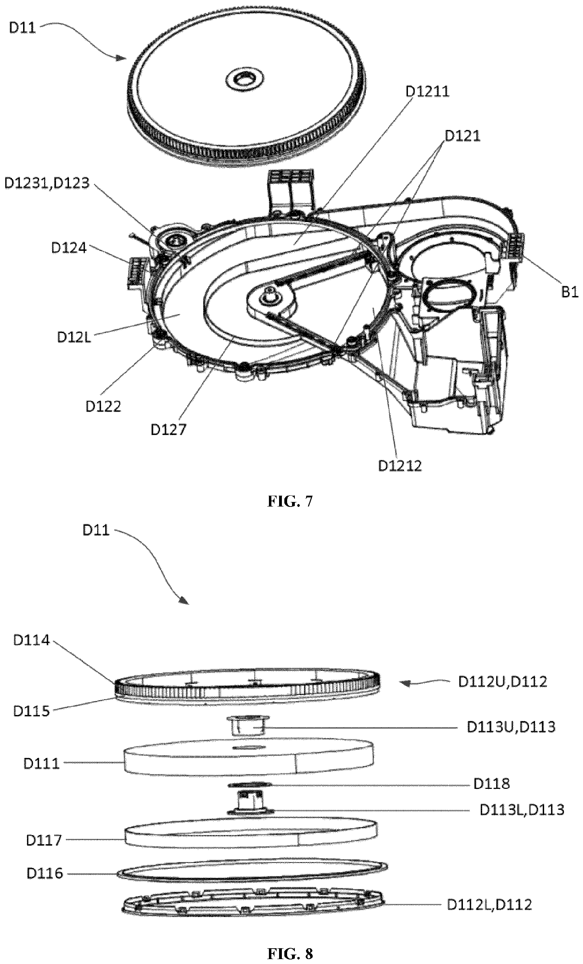

FIG. 6 shows an exploded view of a moisture-absorbing and dehumidifying component D1 in the integrated washer-dryer according to the first embodiment of the present disclosure. FIG. 7 shows a perspective view of a moisture-absorbing rotary wheel assembly D11 and a rotary wheel lower housing D12L in the integrated washer-dryer, according to the first embodiment of the present disclosure. As shown in FIGs. 6 and 7, the moisture-absorbing and dehumidifying component D1 includes the moisture-absorbing rotary wheel assembly D11, the rotary wheel housing D12, and the rotary wheel driving mechanism D13. The rotary wheel housing D12 includes a rotary wheel upper housing D12U and the rotary wheel lower housing D12L which are fixed to each other to form an inner cavity. The moisture-absorbing rotary wheel assembly D11 is rotatably supported, along the axis of rotation thereof, in the inner cavity of the rotary wheel housing D12 and rotates under the drive of the rotary wheel driving mechanism D13. The moisture-absorbing rotary wheel assembly D11 is driven at the outer periphery thereof by the rotary wheel driving mechanism D13. That is, the rotary wheel driving mechanism D13 applies its output drive force to the outer periphery of the moisture-absorbing rotary wheel assembly D11. In this case, straight teeth evenly distributed circumferentially are configured on the outer peripheral surface of the moisture-absorbing rotary wheel assembly D11, and the rotary wheel driving mechanism D13 has a transmission mechanism D132 configured to be paired with the straight teeth. The moisture-absorbing rotary wheel assembly D11 and the rotary wheel driving mechanism D13, in particular the paired transmission mechanism D132 therein, are substantially arranged side by side in the direction perpendicular to the axis of rotation of the moisture-absorbing rotary wheel assembly D11, i.e., a radial direction. The rotary wheel housing D12 has accommodation parts for accommodating the moisture-absorbing rotary wheel assembly D11 and the rotary wheel driving mechanism D13, respectively. That is, the moisture-absorbing rotary wheel assembly and the rotary wheel driving mechanism share the same rotary wheel housing D12.

As shown in FIGs. 6 and 7, the rotary wheel housing D12 is provided with at least two pairs of partition ribs D121, opposing and extending to each other, on inner end surface walls of the rotary wheel upper housing D12U and the rotary wheel lower housing D12L so as to partition an inner space of the rotary wheel housing D12 into a moisture-absorbing region D1211 and a dehumidifying region D1212, thereby separating a moisture-absorbing airflow and a dehumidifying airflow inside the rotary wheel housing D12. Gaps are reserved between the partition ribs D121 and the wheel disc 111.

As shown in FIGs. 6 and 7, partition sealing members D125 are fixed on surfaces, facing the wheel disc D111, of the partition ribs D121 defining the dehumidifying region D1212 in a surrounding manner. The partition sealing members D125 are sized to keep a tiny gap only with the wheel disc D111 so as to prevent the airflow from scurrying between the moisture-absorbing region D1211 and the dehumidifying region D1212, as much as possible, without blocking the rotation of the wheel disc D111. It is particularly advantageous to set the gap between the partition sealing members D125 and the wheel disc D111 to range from 0.2 mm to 5 mm, for example 0.8 mm. With such a gap, the rotation of the wheel disc is not blocked under the consideration of the general axial run-out of the wheel disc during its rotational operation, and, furthermore, the airflow can be favorably prevented from scurrying among the respective regions. The partition sealing members D125 are flexible and configured as, for example, foam, silica gel or soft rubber, which is advantageous to reduce the risk of damaging the wheel disc when the axial run-out of the wheel disc is extremely violent. In some other alternative technical solutions, the partition sealing members may be further configured as seal strips and are in contact with the wheel disc in an assembled state, thereby achieving a relatively rotatable contact with the wheel disc to form a seal.

As shown in FIGs. 6 and 7, partition compression sheets D126 are fixed onto surfaces, facing the wheel disc D111, of the partition ribs D121 defining the dehumidifying region D1212 in a surrounding manner. The partition compression sheets D126 have a plurality of bulges disposed at intervals so as to position and extrude the partition sealing members D125 onto the partition ribs D121. Specifically, grooves for arrangement of the partition compression sheets D126 are configured on the side of the partition sealing members D125 facing the wheel disc D111. The thickness of each groove is greater than the thickness of each partition compression sheet D126 such that the partition sealing member D125 is closer to the wheel disc D111 in an assembled state. The partition sealing members D125 and the partition compression sheets D126 each have a shape and size matching at least part of the edge of the dehumidifying region D1212. The partition compression sheet herein can also act as a partition heat-insulation member for reducing heat diffusion between the moisture-absorbing region D1211 and the dehumidifying region D1212. Preferably, the partition compression sheet D126 is made of a heat-insulation material and may be also manufactured by using metal or alloy with lower cost. Here, although with a better heat-conducting property, the metal or alloy still has a heat-insulation effect after being covered by the sealing members.

As shown in FIGs. 6 and 7, one airflow guide sheet D127 is further disposed in the rotary wheel housing D12 and is configured to divide a moisture-absorbing airflow entering the rotary wheel housing into two streams of airflows and to allow the two streams of airflows to flow through the wheel disc D111 of the moisture-absorbing rotary wheel assembly D11 from different regions, respectively. One end of the airflow guide sheet D127 is disposed in the center of a region of the moisture-absorbing airflow inlet for the moisture-absorbing airflow, in the rotary wheel housing D12. It is also possible to contemplate providing a plurality of airflow guide sheets, the ends of which preferably divide the region of the moisture-absorbing airflow inlet equally and are preferably substantially evenly arranged in the entire moisture-absorbing region. The airflow guide sheet D127 is manufactured in a bending way. The provision of such an airflow guide sheet D127 can prevent the moisture-absorbing airflow from being accumulated in a region, located outward in a radial direction, along with the rotating moisture-absorbing rotary wheel assembly D11 after the moisture-absorbing airflow enters the moisture-absorbing region D1211. That is, the evenness of the moisture-absorbing air flowing through the wheel disc is improved, thereby increasing the moisture-absorbing efficiency.

As shown in FIGs. 6 and 7, a plurality of circumferential roller mechanisms D122 is disposed at the inner periphery of the rotary wheel housing D12. Each circumferential roller mechanism D122 includes a circumferential roller and a circumferential roller bracket, with the circumferential roller rotatably supported on the circumferential roller bracket and the circumferential roller bracket disposed at the inner periphery of the rotary wheel housing D12. As viewed in the direction parallel to the axis of rotation of the moisture-absorbing rotary wheel assembly D11, i.e., as viewed axially, the circumferential rollers are arranged within an axial dimensional range of the moisture-absorbing rotary wheel assembly D11. As viewed in the direction perpendicular to the axis of rotation of the moisture-absorbing rotary wheel assembly D11, i.e., as viewed radially, the circumferential rollers are arranged between the moisture-absorbing rotary wheel assembly D11 and the rotary wheel housing D12; and the circumferential rollers D1221 may be in rolling contact with the outer peripheral surface of the moisture-absorbing rotary wheel assembly D11 for at least part of time during the rotation of the moisture-absorbing rotary wheel assembly D11. In this embodiment, the circumferential rollers at least partially protrude, toward the axis of rotation, from the entire inner peripheral wall of the inner periphery of the rotary wheel housing. Hence, even when the moisture-absorbing rotary wheel assembly D1 1 is deflected radially, the moisture-absorbing rotary wheel assembly D11 will not directly touch the rotary wheel housing D12 per se, such that the risk of damaging the moisture-absorbing rotary wheel assembly D11 is reduced.

As shown in FIGs. 6 and 7, a plurality of bottom roller mechanisms D123 is disposed on an inner bottom wall of the rotary wheel housing D12. Each bottom roller mechanism D123 includes a bottom roller and a bottom roller bracket, with the bottom roller rotatably supported on the bottom roller bracket and the bottom roller bracket arranged on the rotary wheel housing D12. As viewed in the direction perpendicular to the axis of rotation of the moisture-absorbing rotary wheel assembly D11, i.e., as viewed radially, the bottom rollers are arranged within a radial dimensional range of the moisture-absorbing rotary wheel assembly D11. As viewed in the direction parallel to the axis of rotation of the moisture-absorbing rotary wheel assembly D11, i.e., as viewed axially, the bottom rollers are arranged between the moisture-absorbing rotary wheel assembly D11 and the rotary wheel housing D12; and a distance between each bottom roller D1231 and the moisture-absorbing rotary wheel assembly D11 is smaller than the minimum distance between the moisture-absorbing rotary wheel assembly D11 and the rotary wheel housing D12. In the illustrated embodiment, the bottom rollers D1231 at least partially protrude, toward the moisture-absorbing rotary wheel assembly D11, from the entire inner bottom surface of the rotary wheel housing D12. Hence, even when the moisture-absorbing rotary wheel assembly D11 is deflected axially, the moisture-absorbing rotary wheel assembly D11 will not touch the rotary wheel housing D12 per se, such that the risk of damaging the moisture-absorbing rotary wheel assembly D11 is reduced.

FIG. 8 shows an exploded view of the moisture-absorbing rotary wheel assembly D11 in the integrated washer-dryer, according to the first embodiment of the present disclosure. In this embodiment, the moisture-absorbing rotary wheel assembly D11 includes a wheel disc D111, an outer-periphery housing member D112, a center housing member D113, a power input member D114, an auxiliary rotation ring D115, a sealing member D116 of the rotary wheel, an outer-periphery damping member D117, and a center damping member D118.

The wheel disc D111 is made of a reproducible moisture-absorbing material. Preferably, the wheel disc D111 may be configured as a porous structure or made of a porous material. In some technical solutions, the wheel disc D111 is made of fibers with a better moisture-absorbing capability-for example, a cotton cloth. The wheel disc D111 has a center hole centrally symmetrically configured along the axis of rotation, and the center hole is a through hole.

As shown in FIG. 8, the outer-periphery housing member D112 consists of an outer-periphery upper clamp housing D112U and an outer-periphery lower clamp housing D112L, each configured in a ring shape. The outer-periphery upper clamp housing D112U has a similarly L-shaped longitudinal section and includes an end segment extending radially and a circumferential segment extending axially. Similarly, the outer-periphery lower clamp housing D112L also has a similarly L-shaped longitudinal section and includes an end segment extending radially and a circumferential segment extending axially. The outer-periphery upper clamp housing D112U and the outer-periphery lower clamp housing D112L are clamped with each other by means of clips and slots configured on the outer-periphery upper clamp housing D112U and the outer-periphery lower clamp housing D 112L, thereby forming, at their inner sides, grooves for accommodating the peripheral region of the wheel disc D111, where each groove is open at only one side. In an efficient snap joint state, the outer-periphery upper clamp housing D112U and the outer-periphery lower clamp housing D112L surround the whole outer peripheral surface of the wheel disc D111 and clamp the wheel disc D111 from the upper and lower end surfaces of the peripheral region of the wheel disc D111 such that the outer-periphery housing member D112 and the wheel disc D111 are connected together in a relative non-rotatable manner. The upper and lower end surfaces of the wheel disc D111 as mentioned herein refer to the radially extending surfaces of the wheel disc D111, which enables the outer peripheral housing member and the wheel disc to be simply connected together in a relative non-rotatable manner. In some alternative technical solutions, the outer-periphery housing member may be also configured by two annular housing members having similarly L-shaped longitudinal sections and one circumferential annular housing member; and these two annular housing members having similarly L-shaped longitudinal sections are fixedly connected to the circumferential annular housing member, respectively. It is also possible to contemplate other housing construction forms for forming, at inner sides, grooves that are each open only at one side. In some other alternative technical solutions, the end segment of the outer-periphery upper clamp housing and the end segment of the outer-periphery lower clamp housing may be also circumferentially discontinuous as long as they can clamp the wheel disc. Furthermore, the fixation between housing members, for example, between the outer-periphery upper clamp housing D112U and the outer-periphery lower clamp housing D112L in this embodiment, may be also implemented by means of threaded fasteners, welding, gluing, etc. The provided outer-periphery housing member can avoid deformation of the wheel disc, in particular the deformation of the wheel disc at the peripheral region after moisture absorption, due to a centrifugal force in a rotation process, and can prevent the wheel disc from damage caused by direct collision with the rotary wheel housing due to reasons such as vibration. Furthermore, the outer-periphery housing member per se can further reduce the radial distance between the moisture-absorbing rotary wheel assembly and the rotary wheel housing, thereby reducing the amount of airflow not passing through the moisture-absorbing rotary wheel assembly. Therefore, the moisture-absorbing efficiency is improved.

Furthermore, the outer-periphery lower clamp housing D112L is configured to be in rolling contact with the bottom roller mechanisms D123, in particular the contact that has occurred in an initial assembly state. Hence, a support force can be provided to the rotating moisture-absorbing rotary wheel assembly D11 all the time by means of the bottom roller mechanisms D123, thereby substantially eliminating losses caused by sliding frictions between the moisture-absorbing rotary wheel assembly D11 and the bottom of the rotary wheel housing D12. Specifically, as viewed axially, the end segment of the outer-periphery lower clamp housing D112L is configured to at least partially cover the mounting position of the bottom roller mechanisms D123 in the rotary wheel lower housing D12L, such that the end segment of the outer-periphery lower clamp housing D112L can be in rolling contact with the bottom roller mechanisms D123.

As shown in FIG. 8, the center housing member D113 consists of a center upper clamp member D113U and a center lower clamp member D113L that are each configured in a ring shape. The center upper clamp member D113U has a similarly L-shaped longitudinal section and includes an end segment extending radially and a circumferential segment extending axially. Similarly, the center lower clamp member D113L also has a similarly L-shaped longitudinal section and includes an end segment extending radially and a circumferential segment extending axially. The center upper clamp member D113U and the center lower clamp member D113L both pass through the center hole of the wheel disc D111 and are clamped with each other by means of clips and slots configured on the center upper clamp member D113U and the center lower clamp member D113L, thereby forming, at their outer sides, grooves for accommodating the center region of the wheel disc D111, where each groove is open only at one side. It is also possible to contemplate that only the center upper clamp member or only the center lower clamp member D113L passes through the center hole of the wheel disc D111. In an efficient snap joint state, the center upper clamp member D113U and the center lower clamp member D113L clamp the wheel disc D111 from the upper and lower end surfaces of the center region of the wheel disc D111, respectively, such that the center housing member D113 and the wheel disc D111 are connected together in a relative non-rotatable manner that enables the outer peripheral housing member and the wheel disc to be simply connected together in a relative non-rotatable manner. In some alternative technical solutions, the center housing member may be also configured by two annular housing members having similarly L-shaped longitudinal sections and one circumferential annular housing member; and these two annular housing members having similarly L-shaped longitudinal sections are fixedly connected to the circumferential annular housing member, respectively. It is also possible to contemplate other housing construction forms for forming, at outer sides, grooves that each are open only at one side. In some other alternative technical solutions, the end segment of the center upper clamp housing and the end segment of the center lower clamp housing may be also circumferentially discontinuous, as long as they can clamp the wheel disc. Furthermore, the fixation between housing members, for example, between the center upper clamp housing D113U and the center lower clamp housing D113L, may be also implemented by means of threaded fasteners, welding, gluing, etc. The provided center housing member can avoid damage to the relative brittle wheel disc caused by collision with a part, for example, a shaft located on the axis of rotation, and can also enhance the retaining effect on the wheel disc to avoid undesired deformation.

As shown in FIG. 8, the power input member D114 is disposed on the outer peripheral surface of the outer-periphery upper clamp housing D112U. The power input member D114 may be integrally formed with the outer-periphery upper clamp housing D112U, or may be independently manufactured and then fixed, for example, welded, onto the outer peripheral surface of the outer-periphery upper clamp housing D1 12U. The power input member D114 is configured as straight teeth that are circumferentially distributed evenly. Accordingly, the rotary wheel driving mechanism D13 has an output gear capable of engaging the power input member D114, as shown in FIG. 6. It is also possible to provide the power input member on the outer peripheral surface of the outer-periphery lower clamp housing in an alternative technical solution. Here, it is also possible to contemplate that the power input member and the rotary wheel driving mechanism are configured as other gear-engagement transmission forms (for example, a worm gear transmission form, a bevel gear transmission form, etc.) or belt transmission forms (for example, a friction belt transmission form, an engagement belt transmission form, etc.) or chain transmission forms. Accordingly, the power input member may be further configured as helical teeth or curved teeth for the gear transmission form, a smooth surface for the friction belt transmission form, various shaped grooves for the engagement belt transmission form, or sprockets for the chain transmission. The power input member provided on the outer peripheral surface of the outer-periphery housing member is helpful to reduce the thickness of the moisture-absorbing and dehumidifying component along the axis of rotation, thereby contributing to the reduced height or thickness of the complete integrated washer-dryer. In some other alternative technical solutions, the power input member is disposed on the inner peripheral surface of the center housing member, and accordingly, the rotary wheel driving mechanism is arranged in the center hole of the wheel disc.

As shown in FIG. 8, the auxiliary rotation ring D115 is further disposed on the outer peripheral surface of the outer-periphery upper clamp housing D 112U. The auxiliary rotation ring D115 and the power input member D114 are arranged in a staggered fashion in the direction of the axis of rotation. The auxiliary rotation ring D115 may be integrally formed with the outer-periphery upper clamp housing D 112U, or may be independently manufactured and then fixed, for example, welded, onto the outer peripheral surface of the outer-periphery upper clamp housing D112U. The auxiliary rotation ring D115 is arranged in a position matching the circumferential roller mechanisms D122, in particular the circumferential rollers therein, so as to achieve rolling fit with the circumferential rollers in the circumferential roller mechanisms D122, as shown in FIG. 6. In some technical solutions, in the initial assembling state, the auxiliary rotation ring D115 and the circumferential rollers in the circumferential roller mechanisms D122 keep in contact without obvious extrusion. When the moisture-absorbing rotary wheel assembly D11 starts rotating, the auxiliary rotation ring D115 thereof and the circumferential rollers in the circumferential roller mechanisms D122 are in rolling contact with each other, thereby inhibiting the radial shaking of the moisture-absorbing rotary wheel assembly D11. Hence, the stable operation of the moisture-absorbing rotary wheel assembly D11 can be guaranteed almost without increasing the rotation resistance to the moisture-absorbing rotary wheel assembly D11. It is also possible to contemplate that, in the initial assembling state, a tiny gap is reserved between the auxiliary rotation ring D115 and the circumferential rollers in the circumferential roller mechanisms D122 so as to further reduce the rotation resistance. This works only when the moisture-absorbing rotary wheel assembly D11 radially shakes. In this case, in particular advantageously, the circumferential roller mechanisms D122 are configured to be deformable, and, in particular, the rollers in the circumferential roller mechanisms D122 are configured to be flexible. Hence, the risk of damaging the auxiliary rotation ring D115 when the auxiliary rotation ring D115 collides with the circumferential roller mechanisms D122 can be reduced.

As shown in FIG. 8, one sealing member D116 of the rotary wheel is disposed on the outer peripheral surface at the position where the outer-periphery upper clamp housing D112U and the outer-periphery lower clamp housing D112L are fixed to each other. The radial inner side of the sealing member D116 of the rotary wheel covers the position where the outer-periphery upper clamp housing D112U and the outer-periphery lower clamp housing D112L are fixed to each other. Hence, the radial inner side of the sealing member D116 of the rotary wheel can be used to seal the position where the outer-periphery upper clamp housing D 112U and the outer-periphery lower clamp housing D112L are fixed to each other, thereby preventing the airflow that has entered the moisture-absorbing rotary wheel assembly D11 from flowing out from a mounting gap of the outer-periphery housing member. Furthermore, the sealing member D116 of the rotary wheel is further configured to extend outward all through in the direction perpendicular to the axis of rotation, i.e., radially, until the sealing member D116 can be in contact with the sealing member D124 of the rotary wheel housing on the inner peripheral surface of the rotary wheel housing D12 in a relative rotatable manner. "Being in contact with each other in a relative rotatable manner" refers to the fact that the contact between the sealing member D116 of the rotary wheel and the sealing member D124 of the rotary wheel housing does not significantly increase the rotation resistance to the moisture-absorbing rotary wheel assembly D11 provided with the sealing member D116 of the rotary wheel. In the illustrated embodiment, the sealing member D124 of the rotary wheel housing is formed by the inner peripheral surface per se of the rotary wheel housing D12. In the illustrated embodiment, the outer peripheral surface of the sealing member D116 of the rotary wheel forms the maximum diameter of the entire moisture-absorbing rotary wheel assembly D11. Hence, the radial outer side of the sealing member D116 of the rotary wheel can be used to close a radial gap between the moisture-absorbing rotary wheel assembly D11 and the rotary wheel housing D12, thereby preventing the airflow not subjected to moisture absorbing from flowing through the gap to enter the drum R. That is to say, the sealing member D116 of the rotary wheel in this embodiment has dual functions, namely preventing the airflow that has entered the moisture-absorbing rotary wheel assembly D11 from flowing out from the mounting gap of the outer-periphery housing member on the one hand, and preventing the airflow not subjected to moisture absorbing from bypassing the moisture-absorbing rotary wheel assembly D11 and flowing out from the periphery of the moisture-absorbing rotary wheel assembly D11 on the other hand. Hence, the moisture-absorbing efficiency can be significantly improved. In some technical solutions, the inner peripheral surface of the rotary wheel housing may be further configured to slightly radially protrude inward, to act as the sealing member of the rotary wheel housing to be in contact with the sealing member of the rotary wheel to form a seal. This can reduce the radial size of the sealing member of the rotary wheel. In this way, the rotational contact for forming the seal explained above can be achieved even if the outer peripheral surface of the sealing member of the rotary wheel is not at the maximum diameter of the entire moisture-absorbing rotary wheel assembly. In some other technical solutions, a separate seal ring is connected, for example, glued, to the position, matching the sealing member of the rotary wheel, on the inner peripheral surface of the rotary wheel housing, to act as the sealing member of the rotary wheel housing to be in contact with the sealing member of the rotary wheel to form a seal. This separate sealing member may be made of, for example, a material the same as that of the sealing member of the rotary wheel. This is also helpful to reduce the radial size of the sealing member of the rotary wheel, and the radial size of the sealing member of the rotary wheel can also be matched flexibly, which allows a larger design space to be reserved for the arrangement of the sealing member of the rotary wheel on the outer peripheral surface of the outer-periphery housing member. In this way, the rotational contact for forming the seal explained above can be achieved even if the outer peripheral surface of the sealing member of the rotary wheel is not at the maximum diameter of the entire moisture-absorbing rotary wheel assembly. Moreover, this separate seal ring can protect the rotary wheel housing from abrasion at the inner peripheral surface, and the seal ring itself is convenient to change. Furthermore, it is also possible to contemplate providing a plurality of sealing members of the rotary wheel. These sealing members of the rotary wheels are staggered from one another and arranged at different positions on the outer peripheral surface of the outer-periphery housing member, thereby at least or even redundantly achieving the aforementioned dual functions. For example, one sealing member of the rotary wheel is disposed on the outer peripheral surface at a position where the outer-periphery upper clamp housing and the outer-periphery lower clamp housing are fixed to each other; and another sealing member of the rotary wheel is disposed on the outer peripheral surface at a position (different from the position for fixation) on the outer-periphery upper clamp housing or the outer-periphery lower clamp housing, or redundantly, another two sealing members of the rotary wheel are disposed on the outer peripheral surfaces at positions (different from the position for fixation) on the outer-periphery upper clamp housing and the outer-periphery lower clamp housing, respectively.

As shown in FIG. 8, the power input member D114, the auxiliary rotation ring D115, and the sealing member D116 of the rotary wheel are completely staggered and successively disposed from the top down on the outer peripheral surface of the outer-periphery housing member D112 in the direction of the axis of rotation. It can be contemplated that the power input member D114, the auxiliary rotation ring D115, and the sealing member D116 of the rotary wheel may also be arranged in a staggered fashion in other orders along the axis of rotation.

As shown in FIG. 8, the moisture-absorbing rotary wheel assembly D11 further includes a deformable outer-periphery damping member D117 and a center damping member D118. The outer-periphery damping member D117 is disposed between the outer peripheral surface of the wheel disc D111 and the inner peripheral surface of the outer-periphery housing member D112 to form a buffer therebetween by using its own deformable property. In some technical solutions, the outer-periphery damping member D117 is glued onto the outer peripheral surface of the wheel disc D111. The center damping member D118 is disposed between the end segment of the center housing member D113 and the center region of the wheel disc D111 to form a buffer therebetween by using its own deformable property. In the illustrated embodiment, the center damping member D118 is disposed between the end segment of the center lower clamp member D113L and the end surface of the center region of the wheel disc D111. In an alternative technical solution, the center damping member D118 may be also disposed between the end segment of the center upper clamp member D113U and the end surface of the center region of the wheel disc D111, or it is also possible to provide one center damping member D118 at each of the above two positions. In some technical solutions, the center damping member D118 is glued onto the end surface of the center region of the wheel disc D111. The outer-periphery damping member D117 and the center damping member D118 are made of, for example, foam. It is also possible to manufacture the outer-periphery damping member D117 and the center damping member D118 by using other elastically deformable materials. During the operation of the integrated washer-dryer, the drum produces vibration. This vibration may sometimes drive the complete machine to vibrate together, causing the moisture-absorbing rotary wheel assembly D11 to vibrate therewith as well. In this case, the outer-periphery damping member D117 and the center damping member D118 can axially and radially buffer this vibration to protect the typically brittle wheel disc D111 from damage.

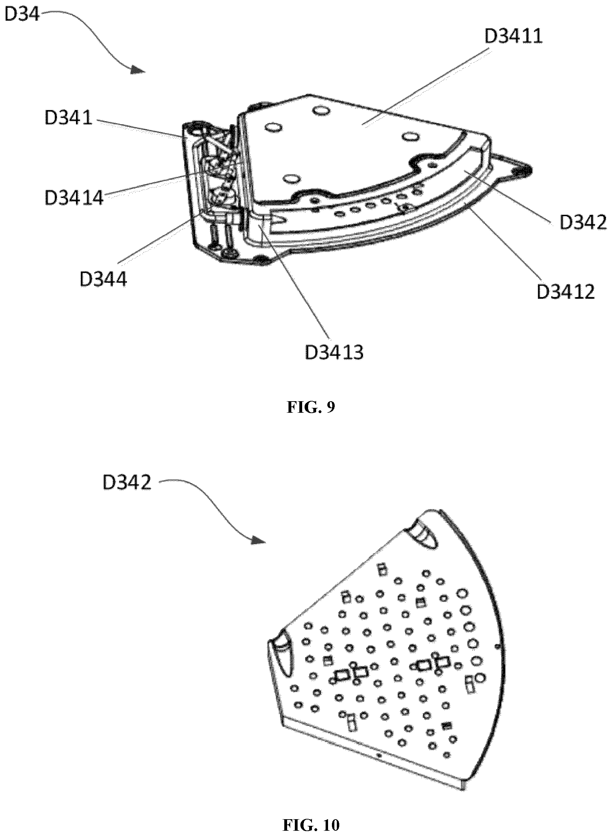

FIG. 9 shows a perspective view of the dehumidifying and heating assembly D34 in the integrated washer-dryer, according to the first embodiment of the present disclosure. The dehumidifying and heating assembly D34 includes a dehumidifying and heating assembly housing D341, a mesh plate D342, a dehumidifying and heating member D343, and a temperature-controller mounting part D344. The dehumidifying and heating assembly housing D341 is configured to be a fan-shaped body having a fan-shaped cross section, and hence has a fan-shaped upper end surface wall D3411, a fan-shaped lower end surface wall D3412, a circumferential side wall D3413 extending circumferentially, and a radial side wall D3414 extending radially, and the circumferential side wall D3413 and the radial side wall D3414 connect the upper end surface wall D3411 and the lower end surface wall D3412 together. The fan-shaped body and the rotary wheel upper housing D12U of the rotary wheel housing D12 are configured in complementary shapes. Specifically, the rotary wheel upper housing D12U is configured with a fan-shaped notch that has a shape substantially the same as that of the dehumidifying and heating assembly housing D341. A dehumidifying airflow outlet is configured as large as possible in the lower end surface wall D3412, such that the air can flow into the moisture-absorbing rotary wheel assembly D11 by means of the dehumidifying airflow outlet. The dehumidifying airflow outlet accounts for at least 80%, preferably 90%, of the area of the lower end surface wall D3412. A dehumidifying airflow inlet is disposed as large as possible in the circumferential side wall D3413 of the dehumidifying and heating assembly housing D341. The dehumidifying airflow inlet accounts for at least 80%, preferably 90%, of the area of the circumferential side wall D3413. Hence, the dehumidifying airflow can enter the dehumidifying and heating assembly D34 in the shortest path. It is also possible to contemplate arranging the dehumidifying airflow inlet in the radial side wall such that the dehumidifying airflow can radially pass through the dehumidifying rotary wheel assembly more evenly, and, in particular, when a plurality of dehumidifying airflow inlets are arranged in the two radial side walls, or arranged in the two radial side walls and one circumferential side wall, the dehumidifying airflow can pass through the moisture-absorbing rotary wheel assembly more evenly within the cross-section range of the fan-shaped body, thereby improving the regeneration efficiency of the moisture-absorbing rotary wheel assembly.

FIG. 10 shows a perspective view of the mesh plate D342 in the dehumidifying and heating assembly D34 in the integrated washer-dryer, according to the first embodiment of the present disclosure from the front side. The mesh plate D342 has a shape matching the dehumidifying airflow outlet and can be fixed in the dehumidifying airflow outlet. A plurality of through holes is configured in the mesh plate D342, and these through holes are distributed in the mesh plate D342 as evenly as possible. In this case, these through holes are distributed in the mesh plate D342 in a snake-like form. Particularly advantageously, the apertures of these through holes gradually decrease in a flow direction of the dehumidifying airflow. The apertures of the through holes closer to the dehumidifying airflow inlet are larger, and the apertures of the through holes further away from the dehumidifying airflow inlet are smaller. That is, the apertures of these through holes are radially configured inward smaller and smaller. Hence, the evenness for the dehumidifying airflow to pass through the moisture-absorbing rotary wheel assembly can be further improved.

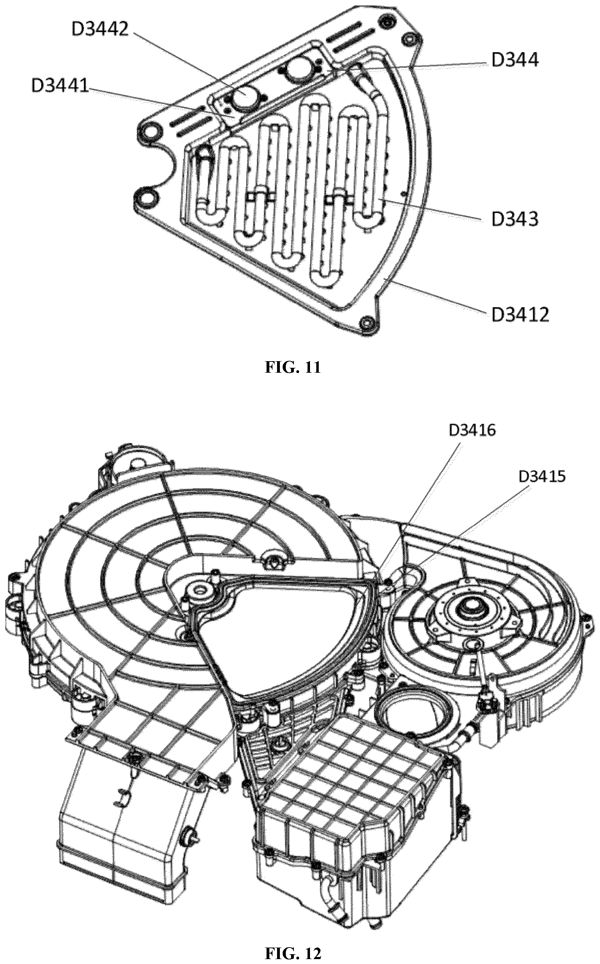

FIG. 11 shows a perspective view of the dehumidifying and heating assembly D34 in the integrated washer-dryer according to the first embodiment of the present disclosure from the back side. The dehumidifying and heating member D343 is disposed in the flow direction of the dehumidifying airflow at the downstream side of the mesh plate D342, i.e., the back side of the mesh plate D342. In this case, the dehumidifying and heating member D343 is configured as a heating pipe spread in a plane in a snake-like form. It is also possible to contemplate constructing the dehumidifying and heating member D343 using a PTC heating body that consists of, for example, ceramic heating elements and aluminum pipes. The dehumidifying and heating member D343 is configured corresponding to the shape of the through holes in the mesh plate D342 and staggered from the through holes. Specifically, the dehumidifying and heating member D343 is staggered toward an inflow direction of the dehumidifying airflow with respect to the through holes such that the dehumidifying airflow directly faces the dehumidifying and heating member D343 after passing through the through holes, thereby improving the heating efficiency. An area defined by envelope lines of the dehumidifying and heating member D343 accounts for at least 70% of the cross section of the dehumidifying airflow outlet, and the area of the cross section of the dehumidifying and heating member D343 per se only accounts for at most 40% of the cross section of the dehumidifying airflow outlet. Hence, the heat can be provided within a range large enough without blocking the passing of the airflow.

As shown in FIG. 11, the dehumidifying and heating assembly D34 further includes a temperature controller mounting part D344. The temperature controller mounting part D344 is also arranged on the back side of the mesh plate and on the side of a region provided with the through holes. The temperature controller mounting part D344 is configured to detect temperature in the inner cavity of the dehumidifying and heating assembly D34. A controller of the integrated washer-dryer controls the dehumidifying and heating member D34 based on this temperature. Since the heated dehumidifying airflow easily forms an eddy flow or a turbulent flow in the inner cavity of the dehumidifying and heating assembly D34, this leads to an extremely unstable or jumping inner-cavity temperature that is directly acquired from the space in the inner cavity. In order for the inner-cavity temperature to remain as stable as possible, the temperature-controller mounting part D344 includes a heat-conducting sheet D3441 and a temperature controller D3442. The heat-conducting sheet D3441 completely covers the temperature controller D3442. As compared with the inner-cavity temperature directly detected from a gas in the inner cavity, a more stable and representative inner-cavity temperature can be detected by transferring the temperature to the temperature controller D3442 via the heat-conducting sheet D3441, and this is particularly advantageous to the temperature control of the dehumidifying and heating member.

FIG. 12 shows a perspective view of a rotary wheel upper housing D12U without the dehumidifying and heating assembly D34 in the integrated washer-dryer, according to the first embodiment of the present disclosure. The dehumidifying and heating assembly housing D341 is separately manufactured independent of the rotary wheel housing D12 and is fixed onto the rotary wheel upper housing D12U. A flexible connection sealing member D3415 is disposed between the dehumidifying and heating assembly housing D341 and the rotary wheel upper housing D12U so as to prevent the dehumidifying airflow from escaping from a gap between the dehumidifying and heating assembly housing D341 and the rotary wheel upper housing D12U. A connecting and heat-insulating member D3416 is further disposed between the dehumidifying and heating assembly housing D341 and the rotary wheel upper housing D12U so as to reduce the heat diffusing outward from the dehumidifying and heating assembly housing D341, in particular heat diffusion toward the moisture-absorbing region D1212 in the rotary wheel housing D12. The connecting and heat-insulating member D3416 is partially covered by the connection sealing member D3415. It is also possible to contemplate that the connecting and heat-insulating member is entirely covered by the connection sealing member such that the dehumidifying and heating assembly housing and the rotary wheel upper housing are both in contact only with the connection sealing member to improve the sealing effect. The connection sealing member D3415 and the connecting and heat-insulating member D3416 each have an inner edge substantially matching the shape of the dehumidifying airflow outlet in the dehumidifying and heating assembly housing D341. The connection sealing member is preferably configured as foam, silica gel, or soft rubber. The heat-insulation members are preferably made of a heat-insulation material. However, it is also possible to contemplate manufacture of the connecting and heat-insulating member from low-cost metal or alloy. Here, although with a good heat-conducting property, the metal or alloy still has a certain heat-insulation effect after being covered by the connection sealing member.

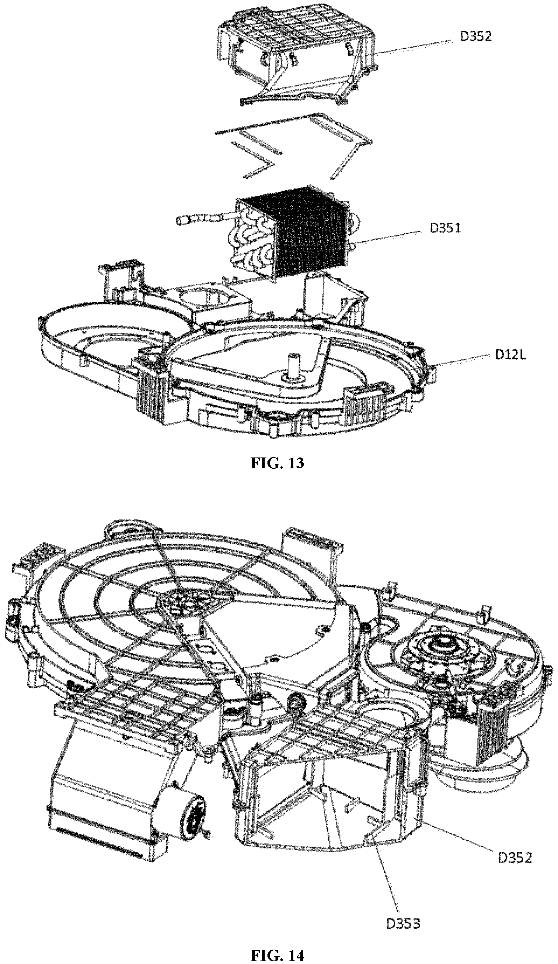

FIG. 13 shows a perspective view of the integrated dehumidifying and condensing pipe D351 of the dehumidifying and condensing assembly D35 in the integrated washer-dryer, according to the first embodiment of the present disclosure. FIG. 14 shows a perspective view of a cut portion of the dehumidifying and condensing assembly housing D352 of the dehumidifying and condensing assembly D35 in the integrated washer-dryer, according to the first embodiment of the present disclosure. The dehumidifying and condensing assembly includes the integrated dehumidifying and condensing pipe D351, the dehumidifying and condensing assembly housing D352, and dehumidifying and condensing water outlet pipe. The integrated dehumidifying and condensing pipe D351 is fixed in the middle of the dehumidifying and condensing assembly housing D352 and is configured to condense and dehumidify the dehumidifying airflow flowing through the integrated dehumidifying and condensing pipe D351. The condensed water is discharged via the dehumidifying and condensing water outlet pipe.

As shown in FIG. 13, the dehumidifying and condensing assembly D35 shares the same lower module housing with the moisture-absorbing rotary wheel assembly D11, the fan D23 for the moisture-absorbing passage, and the fan D33 for the dehumidifying passage. The integrated dehumidifying and condensing pipe D351 matches the lower module housing by virtue of a stop rib and a limiting member, and the upper housing in the dehumidifying and condensing assembly housing D352 extrudes downward a seal strip surrounding the integrated dehumidifying and condensing pipe D351 to achieve a sealing effect.

As shown in FIG. 14, in order to prevent the dehumidifying airflow from bypassing, after entering the dehumidifying and condensing assembly housing D352, the integrated dehumidifying and condensing pipe D351 and directly flowing to the outlet in the dehumidifying and condensing assembly housing from a gap between the integrated dehumidifying and condensing pipe D351 and the dehumidifying and condensing assembly housing D352, a baffle D353 is disposed between the integrated dehumidifying and condensing pipe D351 and the dehumidifying and condensing assembly housing D352.

Furthermore, as shown in FIGs. 7 and 14, the drying module assembly D may be pre-assembled into only one pre-assembled module before the assembling of the complete integrated washer-dryer. The pre-assembled module may include only one integrally formed lower module housing and a plurality of split upper housings. The lower module housing and the upper housings together form a plurality of chambers that are configured to accommodate various functional modules in the drying module assembly-for example, the moisture-absorbing rotary wheel assembly D11, the fan D23 for the moisture-absorbing passage, the fan D33 for the dehumidifying passage, the rotary wheel driving mechanism D13, the dehumidifying and heating assembly D34, and the dehumidifying and condensing assembly D35. This kind of integrated modular manufacturing greatly simplifies assembling and thus improves assembling efficiency on the one hand, and eliminates or shortens the corresponding connection pipeline on the other hand, thereby enabling a more compact structure of the drying module assembly.

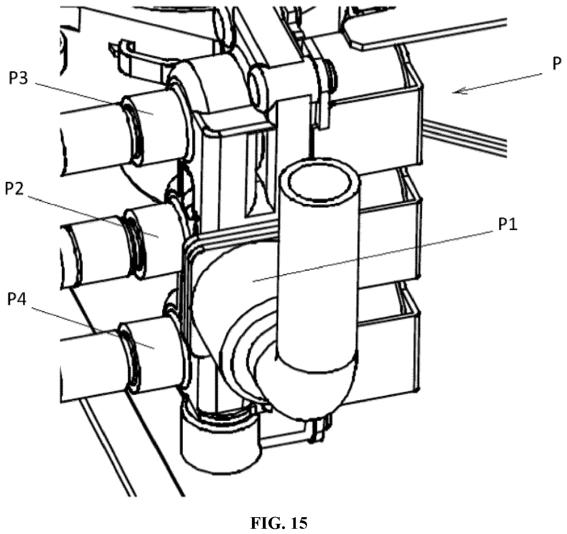

FIG. 15 schematically shows a perspective view of a pipe assembly P in the integrated washer-dryer, according to the present disclosure. The pipe assembly P includes a water inlet pipe P1, a first water outlet pipe P2, a second water outlet pipe P3, and a third water outlet pipe P4. One end of the water inlet pipe P1 is connected to a tap-water pipe, and the other end of the water inlet pipe P1 is connected to one end of the first water outlet pipe P2, one end of the second water outlet pipe P3, and one end of the third water outlet pipe P4, respectively. The other end of the first water outlet pipe P2 is connected to the water inlet of the dehumidifying and condensing assembly D35. The other end of the second water outlet pipe P3 is connected to the water inlet of the cleaner holding box C. The other end of the third water outlet pipe P4 is connected to the water inlet of the air outlet pipeline L1. With such a complex pipe circuit system, water from the tap-water pipe can be delivered to the dehumidifying and condensing assembly D35, the cleaner holding box C, and the air outlet pipeline L1, respectively, so as to meet their water demand. The dehumidifying and condensing assembly D35, the cleaner holding box C, the water inlet of the air outlet pipeline L1, and the pipe assembly P are all arranged on the upper part of the drum R. With such an arrangement, the space at the upper part of the drum R can be fully utilized such that the overall arrangement of the integrated washer-dryer 1 is very compact. Such an arrangement also facilitates the pipe circuit arrangement from the pipe assembly P to the water inlet of each assembly, which minimizes the overall length of the pipe circuit. Specifically, the dehumidifying and condensing assembly D35, the cleaner holding box C, the water inlet of the air outlet pipeline L1, and the pipe assembly P are located at four corners of the integrated washer-dryer 1. The air outlet pipeline L1 is arranged at the rear right side of the drum R, and the water inlet of the air outlet pipeline L1 and the pipe assembly P are arranged together at the rear right corner of the integrated washer-dryer W such that the length of the pipe circuit from the third water outlet pipe P4 of the pipe assembly P to the water inlet of the air outlet pipeline L1 can be shortened. The water inlet pipe P1 and/or the first water outlet pipe P2 and/or the second water outlet pipe P3 and/or the third water outlet pipe P4 are/is provided with an electromagnetic valve to control the on/off and/or flow of a water pipe. The respective pipelines or water inlets may be connected by means of hoses. The use of the hoses can allow the pipe circuits to be flexibly arranged in gaps among the respective assemblies.

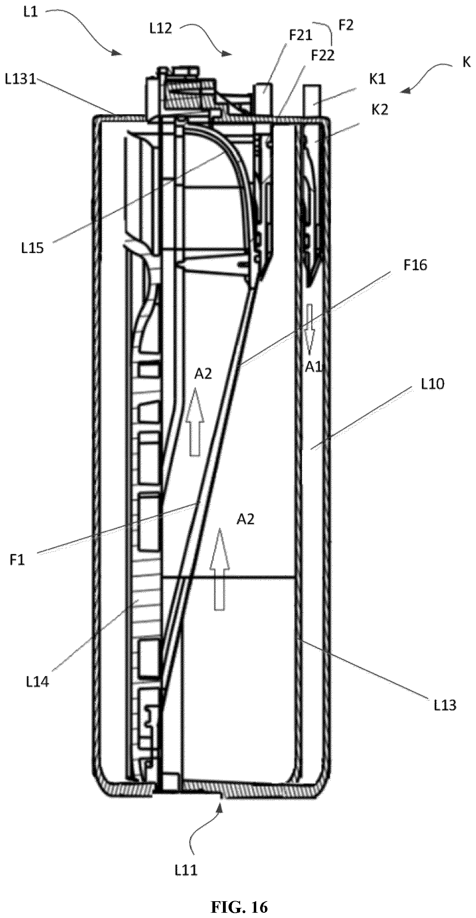

FIG. 16 shows a perspective view of a longitudinal sectional view of an air outlet pipeline L1 provided with a filter screen self-cleaning device in the integrated washer-dryer, according to the present disclosure. The air outlet pipeline L1 is disposed behind and next to the drum R and extends from the bottom up. This extending way can reduce the overall height of the integrated washer-dryer 1 such that the integrated washer-dryer 1 can be conveniently placed below a tabletop. The air outlet pipeline L1 is connected, at the first end L11 thereof, to the air outlet of the drum R, and is connected, at the second end L12 thereof, to the drying module assembly D. The air outlet pipeline L1 includes a first half housing L13 and a second half housing L14 between which a cavity is defined. At the first end L11 of the air outlet pipeline L1, the second half housing L14 has an air inlet (not shown) for connecting to the air outlet of the drum R; and, at the end of the first half housing L13 facing the air inlet, the first half housing L13 preferably has a cambered inner surface for guiding the airflow entering the cavity. At the second end L12 of the first half housing L13, a cambered support plate L15 is provided. The cambered support plate L15 is connected, at the first end thereof, to a top panel L131 of the first half housing L13, and extends, at the second end thereof, into the cavity. The cambered support plate L15 is advantageous for guiding the filtered airflow so as to avoid turbulence. By virtue of the second end of the cambered support plate L15, the filter screen F1 is obliquely disposed inside the cavity from the lower part of the second half housing L14 to the upper part of the first half housing L13, thereby dividing the cavity into a non-clean space and a clean space. In other embodiments, the support plate L15 may have other configurations and shapes, for example, a flat plate form, with one end fixed to the upper part of the first half housing L13 and the other end extending into the non-clean space so as to fix a top edge of the filter screen F1 at the edge. The angle of inclination of the filter screen F1 can be adjusted as required to improve the rinsing efficiency. All airflows entering the cavity from the air inlet at the first end L11 of the air outlet pipeline L1 first enter the non-clean space, sequentially pass through an air intake surface F11 and a cleaning surface F12 of the filter screen F1, then enter the clean space, and then are transferred to the drying module assembly via the air outlet (not shown) at the second end L12 of the air outlet pipeline L1. Due to this arrangement of the filter screen F1, inclusions filtered and left on the filter screen F1 mainly deposit on the air intake surface F11.

In order to clean the filter screen F1, a filter screen self-cleaning device F2 is disposed at the second end L12 of the air outlet pipeline L1. The filter screen self-cleaning device F2 sprays, at the non-clean space side, cleaner-containing tap water from one side of the air intake surface F11 of the filter screen F1 onto the filter screen so as to rinse off lint and other inclusions attached to the filter screen F1. After the filter screen is rinsed, the used tap water flows out of the water outlet (not shown) disposed in the first end L11 of the air outlet pipeline L1 and is discharged from the integrated washer-dryer, for example, via a discharge outlet disposed exclusively for liquid for self-cleaning use, or via a water draining port of the drum. It can be understood that the filter screen self-cleaning device may be also disposed on one side of the cleaning space so as to simultaneously or asynchronously rinse the cleaning surface of the filter screen F1 in order to clean the filter screen more thoroughly.

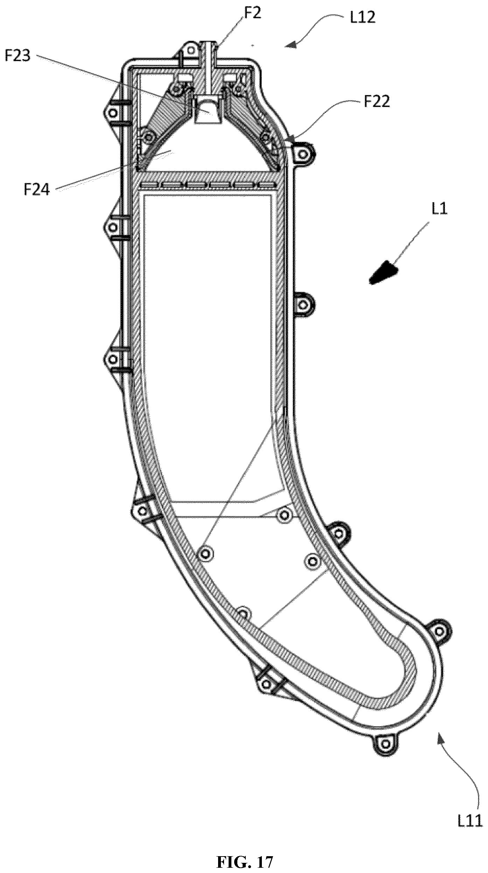

FIG. 17 schematically shows a sectional view, taken along line A-A in FIG. 16, of the filter screen self-cleaning device F2 in the integrated washer-dryer, according to the present disclosure. The filter screen self-cleaning device F2 includes a water inlet pipe F21 and a nozzle F22 connected to the water inlet pipe. The water inlet pipe F21 is hermetically fixed, at the non-clean space side, to a top panel L131 of the air outlet pipeline L1 and is connected to a tap-water inlet pipe via, for example, a hose traversing across the drum R. The nozzle F22 connected to the water inlet pipe is disposed and configured on the top of the filter screen F1 to spray the tap water (which may contain a cleaner) onto the air intake surface F16 of the filter screen F1. In other embodiments, a pressurization valve is disposed upstream of the water inlet pipe F21 to pressurize the tap water entering the filter screen self-cleaning device so as to rinse the filter screen F1 by using the pressurized tap water, which is advantageous to the improvement of the cleaning efficiency and the cost effectiveness. In other embodiments, the water inlet pipe F21 may be fixed to the first half housing L13 in other forms, for example, by virtue of the support plate in the aforementioned flat plate form.

In this embodiment, the nozzle F22 includes an adapter F23 connected to the water inlet pipe F21 and an increasingly wider extending part F24 integrally formed with the adapter F23. The adapter F23 is fixedly connected to the water inlet pipe F21 by means of, for example, threaded connection, interference fit, adhesive, and other forms. The increasingly wider extending part F24 inclines at a certain angle with respect to the filter screen F1 and has a free end provided with an outlet that traverses a cavity of the air outlet pipeline L1 to cover the substantially entire width of the filter screen F1 (as shown in FIG. 3), thereby guaranteeing the cleaning coverage. Preferably, an included angle between the increasingly wider extending part F24 and the filter screen F1 ranges from 0° to 45°, more preferably from 5° to 35°. An overlarge angle is averse to the flow of the tap water from the top of the filter screen F1 to the bottom of the filter screen F1, leading to reduced cleaning efficiency. Preferably, the increasingly wider extending part is gradually reduced along its length (i.e., in its inclination direction) to form a flat opening at its free end, which facilitates water pressurization and increases the impact force to the filter screen F1, thereby increasing the cleaning efficiency.

As shown in FIG. 16, the air outlet pipeline L1 includes two layers of pipe walls; a chamber of a cooling passage L10 allowing the flow of cooling water is formed between the two layers of pipe walls; and the flow direction of a water flow A1 is shown by arrows and is opposite to the flow direction of an airflow A2, which is advantageous to cooling and liquification of the airflow. The cooling passage L10 guides the cooling water to flow to an outer wall of the air outlet pipeline L1 so as to cool and liquify an airflow flowing through therein, such that humid air discharged from the drum R has been pre-dehumidified before entering the drying module assembly D. Hence, the load of a dehumidifying device in the drying module assembly is reduced, and the dehumidifying effect is improved. A condensing mechanism K is disposed at the first end of the cooling passage L10 close to the drying module assembly D and includes a water inlet pipe K1 and a water spray nozzle K2 connected to the water inlet pipe K1. The water inlet pipe K1 is hermetically fixed to the first end of the cooling passage L10 by, for example, the combination of threaded fit and a sealant, and is connected to the tap water inlet pipe of the integrated washer-dryer W by, for example, an electromagnetic valve. In this embodiment, the water inlet pipe K1 of the condensing mechanism 9 simultaneously forms the first water inlet for the air outlet pipeline L1 or the cooling passage L10. The water spray nozzle K2 is configured to spray the cooling water to the outer wall of the air outlet pipeline L1 so as to enhance the cooling effect of the cooling water on the outer wall. Preferably, the water spray nozzle K2 includes an increasingly wider extending part, which is gradually reduced along its length to form a flat opening at its free end so as to increase a spray coverage and water pressure to further enhance the cooling effect on the outer wall of the air outlet pipeline. Preferably, a plurality of water spray nozzles K2 may be disposed in the cooling passage L10. In particular, a plurality of water spray nozzles K2 may be disposed at intervals circumferentially along the outer wall of the air outlet pipeline L1, and this is particularly advantageous when the cooling passage L10 circumferentially and completely surrounds the first half housing L3 and the second half housing L14 of the air outlet pipeline L1. Furthermore, the water spray nozzle K2 may be configured as a 360° autorotation nozzle, thereby increasing the spray coverage to enhance the cooling effect on the outer wall of the air outlet pipeline. A first water draining port for draining the cooling water is disposed at the second end of the cooling passage L10 close to the drum R.

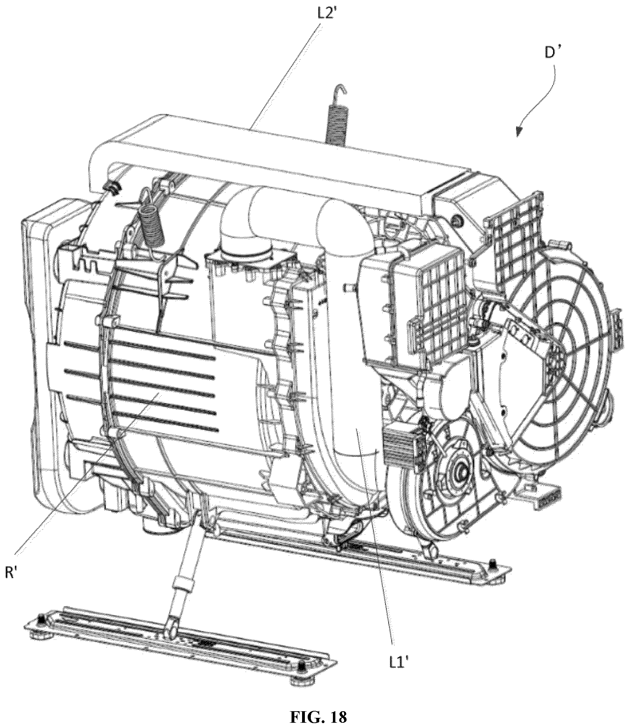

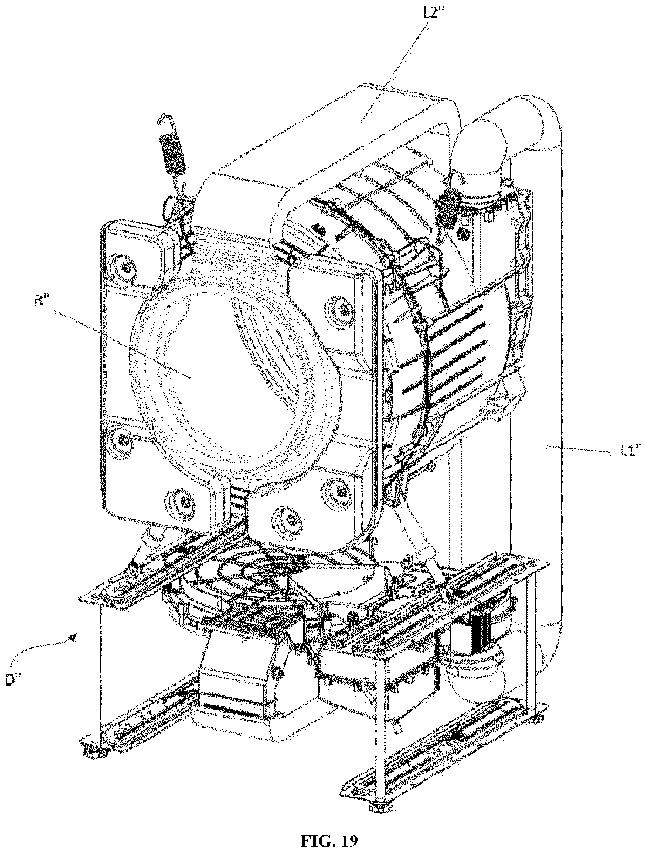

FIGs. 18 and 19 show perspective views of integrated washer-dryers according to a second embodiment and a third embodiment of the present disclosure. Unlike the first embodiment in which the drying module assembly D is arranged above the drum R, in the second embodiment, a drying module assembly D' is arranged behind a drum R'. In this case, an air outlet pipeline L1' for communicating the air outlet of the drum R' with the air inlet of the drying module assembly D', i.e., the air inlet of the moisture-absorbing passage, is arranged above the drum R' and between the drying module assembly D' and the drum R'; and an air inlet pipeline L2' for communicating the air inlet of the drum R' with the air outlet of the drying module assembly D', i.e., the air outlet of the moisture-absorbing passage, is arranged above the drum R'. In the third embodiment, a drying module assembly D" is arranged below a drum R". In this case, an air outlet pipeline L1" for communicating the air outlet of the drum R" with the air inlet of the drying module assembly D", i.e., the air inlet of the moisture-absorbing passage, and an air inlet pipeline L2" for communicating the air inlet of the drum R" with the air outlet of the drying module assembly D", i.e., the air outlet of the moisture-absorbing passage, are arranged above and behind the drum R". The arrangement in the first embodiment exhibits a particularly compact structure, a larger space for accommodating the functional assemblies in the drying module assembly D is reserved laterally above the drum R that is a horizontally arranged cylinder, and the arrangement of the drying module assembly D above the drum further facilitates assembling and maintenance. The arrangement in the second embodiment further reduces the height of the integrated washer-dryer, which is applicable to environments sensitive to the height of the integrated washer-dryer. The third embodiment is advantageous for extension use of a case in which a plurality of drums shares one or more (but fewer than the number of the drums) drying module assemblies. For example, a second drum may be additionally mounted below the drying module assembly D" and is shown in FIG. 16, and a switching mechanism for optionally communicating the drying module assembly D" with either of the drums via a fluid may be additionally mounted in a space between the two drums. This is applicable to places such as large-scale laundries.

The drying module assembly described above may be also applied to the fields of clothes dryers, dehumidifiers, dishwashers and others requiring dehumidification.

It should be understood that the above embodiments are merely for exemplary and illustrative purposes and are not intended to limit the present disclosure to the scope of the embodiments described. In other words, the present disclosure may also be implemented in a variety of additional combinations of the features mentioned above and is not only limited to the embodiments as illustrated and described.

## Claims

1. An integrated washer-dryer, comprising a drum and a drying module assembly, wherein the drying module assembly comprises a moisture-absorbing and dehumidifying component, a moisture-absorbing passage, and a dehumidifying passage; the moisture-absorbing passage comprises an air inlet of the moisture-absorbing passage and an air outlet of the moisture-absorbing passage; the drum is communicated with the air inlet of the moisture-absorbing passage and the air outlet of the moisture-absorbing passage, respectively; a fan for the moisture-absorbing passage is arranged in the moisture-absorbing passage so as to form a moisture-absorbing airflow in the drum and in the moisture-absorbing passage; a fan for the dehumidifying passage is arranged in the dehumidifying passage so as to form a dehumidifying airflow in the dehumidifying passage; the moisture-absorbing and dehumidifying component is disposed in a path of the moisture-absorbing passage and the dehumidifying passage, such that the moisture-absorbing airflow and the dehumidifying airflow both flow through the moisture-absorbing and dehumidifying component, thereby allowing the moisture-absorbing and dehumidifying component to absorb moisture from the moisture-absorbing airflow during rotation and to discharge the absorbed moisture by means of the dehumidifying airflow.

2. The integrated washer-dryer according to claim 1, wherein the moisture-absorbing and dehumidifying component comprises a moisture-absorbing rotary wheel assembly, a rotary wheel housing, and a rotary wheel driving mechanism for driving the moisture-absorbing rotary wheel assembly to rotate, and the moisture-absorbing rotary wheel assembly is rotatably supported in the rotary wheel housing along an axis of rotation.

3. The integrated washer-dryer according to claim 2, wherein the moisture-absorbing rotary wheel assembly is driven at an outer periphery thereof by the rotary wheel driving mechanism.

4. The integrated washer-dryer according to claim 2 or 3, wherein at least one circumferential roller mechanism is disposed at an inner periphery of the rotary wheel housing and comprises a circumferential roller and a circumferential roller bracket, the circumferential roller being rotatably supported on the circumferential roller bracket, and the circumferential roller bracket being disposed at the inner periphery of the rotary wheel housing, wherein, when viewed in a direction parallel to the axis of rotation, the circumferential roller is arranged in a dimensional range of the moisture-absorbing rotary wheel assembly in a direction of the axis of rotation; when viewed in a direction perpendicular to the axis of rotation, the circumferential roller is arranged between the moisture-absorbing rotary wheel assembly and the rotary wheel housing; and the circumferential roller is capable of being in rolling contact with an outer peripheral surface of the moisture-absorbing rotary wheel assembly for at least part of time during the rotation of the moisture-absorbing rotary wheel assembly.

5. The integrated washer-dryer according to claim 2 or 3, wherein at least one bottom roller mechanism is disposed at an inner bottom surface of the rotary wheel housing; the bottom roller mechanism comprises a bottom roller and a bottom roller bracket; the bottom roller is rotatably supported on the bottom roller bracket; the bottom roller bracket is disposed on the rotary wheel housing; when viewed in a direction perpendicular to the axis of rotation, the bottom roller is arranged in a dimensional range of the moisture-absorbing rotary wheel assembly in the direction perpendicular to the axis of rotation; and when viewed in a direction parallel to the axis of rotation, the bottom roller is arranged between the moisture-absorbing rotary wheel assembly and the rotary wheel housing, and a distance between the bottom roller and the moisture-absorbing rotary wheel assembly is smaller than a minimum distance between the moisture-absorbing rotary wheel assembly and the rotary wheel housing.

6. The integrated washer-dryer according to claim 2 or 3, wherein a sealing member of a rotary wheel is disposed at an outer surface of an outer periphery of the moisture-absorbing rotary wheel assembly, a sealing member of the rotary wheel housing is disposed at an inner surface of the rotary wheel housing, and the sealing member of the rotary wheel and the sealing member of the rotary wheel housing are in contact with each other in a relative rotatable manner to form a seal.

7. The integrated washer-dryer according to claim 2 or 3, wherein an axis of rotation of the moisture-absorbing rotary wheel assembly and an axis of rotation of the fan for the moisture-absorbing passage are both heteroplanar with and perpendicular to the axis of rotation of the drum and are distributed on two sides of the axis of rotation of the drum.

8. The integrated washer-dryer according to any one of claims 1 to 3, wherein a plurality of partition ribs extending in a radius range are integrally formed on or fixed onto an inner wall of an end surface of the rotary wheel housing, thereby partitioning an inner cavity of the rotary wheel housing at least into a moisture-absorbing region and a dehumidifying region; partition sealing members are optionally fixed onto surfaces of the partition ribs; and a distance between the partition sealing member and a wheel disc in the moisture-absorbing rotary wheel assembly is in a range of 0 mm to 5 mm.

9. The integrated washer-dryer according to any one of claims 1 to 3, wherein the integrated washer-dryer further comprises an air outlet pipeline disposed between the air outlet of the drum and the air inlet of the drying module assembly; and a filtering module assembly is disposed in the air outlet pipeline and comprises a filter screen for filtering an airflow flowing through the air outlet pipeline, and a filter screen self-cleaning device.

10. A drying module assembly in the integrated washer-dryer according to any one of claims 1 to 9.
